Europäisches Patentamt

European Patent Office

Office européen des brevets

(19)

(11) Veröffentlichungsnummer : **0 096 649**
**B1**

(12) # EUROPÄISCHE PATENTSCHRIFT

(45) Veröffentlichungstag der Patentschrift :
30.07.86

(21) Anmeldenummer : 83710002.3

(22) Anmeldetag : 12.02.83

(51) Int. Cl.⁴ : **F 16 L 37/28, F 16 L 29/00**

(54) **Unter Druck und auch drucklos kuppelbare Schnellverschlusskupplung, insbesondere für Hydraulikleitungen.**

(30) Priorität : 25.03.82 DE 3210937
16.10.82 DE 3238410

(43) Veröffentlichungstag der Anmeldung :
21.12.83 Patentblatt 83/51

(45) Bekanntmachung des Hinweises auf die Patenterteilung : 30.07.86 Patentblatt 86/31

(84) Benannte Vertragsstaaten :
AT BE CH FR GB IT LI NL SE

(56) Entgegenhaltungen :
DE-A- 3 005 490
DE-A- 3 015 601
DE-A- 3 039 072
DE-A- 3 041 305
US-A- 3 791 411

(73) Patentinhaber : Aeroquip AG
Hirschgässlein 40
CH-4052 Basel (CH)

(72) Erfinder : Geiger, Wolfgang
Karlshafener Strasse 1
D-3512 Reinhardshagen (DE)

(74) Vertreter : Patentanwälte Dipl.-Ing. Rudolf Bibrach
Dipl.-Ing. Elmar Rehberg
Pütterweg 6 Postfäch 738
D-3400 Göttingen (DE)

EP 0 096 649 B1

## Beschreibung

Die Erfindung bezieht sich auf eine unter Druck und auch drucklos kuppelbare Schnellverschlußkupplung, insbes. für Hydraulikleitungen, der im Oberbegriff des Anspruches 1 angegebenen Art. Eine solche Schnellverschlußkupplung soll also sowohl dann kuppelbar sein, wenn der Stecker unter Druck steht, als auch dann, wenn der Stecker drucklos ist.

Eine Schnellverschlußkupplung der genannten Art ist aus der DE-A-3 005 490 bekannt. Zur Verriegelung der beiden Ventilkörper in der Offenstellung der Kupplung ist ein zweites Kugelgesperre außen zwischen der Schiebehülse und dem Kupplungskörper vorgesehen. Der Sternkörper der Muffe ist zur Bereitstellung eines weiteren Ventilkörperhubes im Anschluß an den einfachen Ventilkörperhub in einer zum Kupplungskörper koaxialen Hülse festgelegt und mit dieser Hülse mindestens entsprechend dem einfachen Ventilkörperhub axial verschieblich gelagert, wobei das zweite Kugelgesperre die koaxiale Hülse festlegt bzw. freigibt. Es versteht sich, daß auch hier die Schiebehülse gegen den Kupplungskörper der Muffe verschiebbar gelagert ist, und zwar gegen die Kraft der Gesperrefeder. Wenn am Außenumfang der Muffe zwei voneinander getrennte Schiebehülsen vorgesehen sind, ist die Funktion zwar einwandfrei, jedoch erfordert die Handhabung einiges Geschick. Es ist aber grundsätzlich möglich, die beiden Ventilkörper des Steckers und der Muffe auch dann in der Offenstellung zu verriegeln, wenn ein druckloser Stecker gekuppelt wurde, wenn also der Ventilkörper der Muffe nur den einfachen Ventilhub zurückgelegt hat. Da die Schließfedern des Steckers und der Muffe etwa gleich Kräfte aufweisen, ist die ordnungsgemäße Blockierung der beiden Ventilkörper auch bei gekuppeltem drucklosem Stecker möglich. Wir jedoch eine gemeinsame Schiebehülse zur gleichzeitigen Betätigung beider Kugelgesperre eingesetzt, muß der Verriegelungsnocken des zweiten Kugelgesperres axial gesehen eine geringere Breite aufweisen; trotzdem kommt es vor, daß eine auftretende Reibung insbes. am ersten Kugelgesperre die Funktionsfähigkeit des zweiten Kugelgesperres behindert. Um diesen Nachteil zu beheben, wird gemäß der DE-A 30 39 072 vorgeschlagen, bei Einsatz einer gemeinsamen Schiebehülse für die Betätigung der beiden Kugelgesperre den Verriegelungsnocken des zweiten Kugelgesperres axial verschieblich gegenüber der Schiebehülse zu lagern und ihn in seine Mittelstellung mit der Kraft zweier Federn zu beaufschlagen. Damit ein exaktes Arbeiten des zweiten Kugelgesperres eintritt, müssen Federn eingesetzt werden, die gleiche Eigenschaften, insbes. gleiche Kraftabgabe aufweisen. Hierbei lassen sich die Toleranzen nicht immer in den gewünschten Grenzen einhalten. Auch kommt es vor, daß Federn unterschiedlich schnell altern, so daß sich hieraus Funktionsungenauigkeiten und

schwierigkeiten für das zweite Kugelgesperre ergeben können, so daß letztendlich die erforderliche Sicherheit für die Verriegelung des zweiten Kugelgesperres und damit der aneinander anliegenden Ventilkörper nicht immer mit der erforderlichen Zuverlässigkeit gegeben ist.

Eine ähnliche Schnellverschlußkupplung ist aus der DE-A- 3 015 601 bekannt. Bei dieser Konstruktion ist im Sternkörper der Muffe ein Kugelgesperre untergebracht, welches, da im Innern angeordnet, nicht durch eine Schiebehülse betätigt werden kann. Es wird hier vielmehr die Verschieberichtung zur Betätigung dieses zweiten Kugelgesperres herangezogen, nämlich die Umkehr der Bewegungsrichtung des Ventilkörpers der Muffe während bzw. nach dem Kuppelvorgang. Die Schließfeder des Ventilkörpers des Steckers ist stärker dimensioniert und besitzt damit eine größere Kraft als die Schließfeder des Ventilkörpers der Muffe. Auf diese Weise wird erreicht, daß beim Kuppeln eines drucklosen Steckers sowie auch beim Kuppeln eines unter Druck stehenden Steckers immer der gleiche Bewegungsablauf erfolgt und auch die einzelnen Teile der Kupplung immer die gleiche Relativlage zueinander einnehmen. Nach dem Verriegeln des Steckers in der Muffe kann der innere Durchgang durch die Kupplung nur dadurch herbeigeführt werden, daß die muffenseitig vorgesehene Druckquelle eingeschaltet wird und mit ihrer Hilfe das Öffnen des Ventilkörpers des Steckers erfolgt. Ob dabei der Ventilkörper des Steckers den vollen einfachen Ventilhub zurücklegt, ist im wesentlichen von der durch die Kupplung fließenden Strömungsmenge und den dabei auf den Ventilkörper des Steckers einwirkenden dynamischen Kräften abhängig. Reichen diese Kräfte aus, um den einfachen Ventilkörperhub am Stecker zu vollenden, dann verriegelt das im Innern angeordnete Kugelgesperre zuverlässig, und zwar gleichgültig, ob der Stecker vorher unter Druck stand oder nicht. Wird aber die betreffende Mengenströmung nicht erreicht und öffnet demzufolge der Ventilkörper des Steckers nicht durch Erreichen des vollen einfachen Ventillkörperhubes, dann können sich Zwischenstellungen ergeben, in denen die beiden Ventilkörper nicht blockiert sind, so daß ein Zuschlagen des Ventilkörpers des Steckers bei auftretenden Rückströmungen eintreten kann.

Die DE-B-27 12 117 zeigt eine ähnliche Schnellverschlußkupplung, bei der ebenfalls der Ventilkörper des Steckers nur um den einfachen öffnungshub verschiebbar im Sternkörper gelagert ist. Der Sternkörper bildet selbst einen festen Anschlag für die Begrenzung des einfachen Ventilhubes des Ventilkörpers des Steckers. Es ist hier ein Sperrmittel in Form eines radial verschiebbaren federbelasteten Nockens vorgesehen, der in den Verschiebeweg des abgesetzten Schaftes des Ventilkörpers der Muffe eingreift und darüberhinaus mit einer Schrägfläche zusammenarbeitet. Dabei ist die Schließfeder, die den Ventilkörper der Muffe in Schließrichtung belastet, stärker dimensioniert als die entsprechende Schließfeder des Steckers. Damit soll erreicht werden, daß in der gekuppelten und geöffneten Stellung die Ventilkörper an dem Anschlag anliegen, der den einfachen Ventilkörperhub des Steckers begrenzt. Dieser Kraftüberschuß bildet je nach dem Auftreten der Rückströmungen nur ein relativ kleines Hindernis. Es ist damit durchaus möglich, daß der Ventilkörper des Steckers zuschlägt. Wird nach einem solchen Zuschlagen jedoch der Durchgang durch die gekuppelte Kupplung wieder geöffnet, dann findet eine Verriegelung durch den radial federbelasteten Bolzen statt. Dies bedeutet, daß zu einer ordnungsgemäßen Verriegelung vom Ventilkörper der Muffe nicht nur der einfache Öffnungshub, sondern ein Weg, der größer ist als der einfache Öffnungshub, zurückgelegt werden muß, wobei nur in einem solchen Falle die Verriegelung stattfindet. Wird dagegen ein druckloser Stecker gekuppelt, dann wird infolge der Abstimmung der Schließfedern der Ventilkörper der Muffe nur den einfachen Öffnungshub zurücklegen, so daß eine Verriegelung nicht stattfindet. Das einmalige Zuschlagen des Ventilkörpers des Steckers bei auftretenden Rückströmungen ist damit Voraussetzung für das Erreichen der Verriegelungsstellung der Ventilkörper. Eine solche Funktionsweise kann nicht befriedigen.

Eine ähnliche, jedoch noch sehr viel komplizierter aufgebaute Schnellverschlußkupplung zeigt die US-A-3 791 411. Diese Kupplung ist zusätzlich auch noch dann kuppelbar, wenn die muffenseitige Leitung während des Kuppelvorganges unter Druck steht. Bei der dortigen Kupplung soll zwar auch dann ein Verriegeln der beiden Ventilkörper möglich sein, wenn ein druckloser Stecker gekuppelt wurde ; dabei wird ein im Innern angeordnetes Kugelgesperre mit einer radial federbelasteten Kugel benutzt. Im Ventilkörper der Muffe ist gegen eine weitere Feder begrenzt verschiebbar gelagert ein Kolben vorgesehen, der mit der Stirnfläche des Ventilkörpers des Steckers ebenfalls zusammenarbeitet. Die Anzahl der Einzelteile ist damit erhöht und es finden insgesamt vier Federn Verwendung, die kraftmäßig aufeinander sorgfältig abgestimmt sein müssen. Hierdurch wird die Kupplung störanfällig. Die Betriebssicherheit wird beeinträchtigt. Ob beim Kuppeln eines drucklosen Steckers eine Verriegelungsstellung erreicht wird, erscheint zweifelhaft. Beim Kuppeln eines unter Druck stehenden Stekkers muß der Durchgang durch die Kupplung durch Einschalten der Druckwelle muffenseitig erzielt werden. Ob dabei der volle einfache Ventilkörperhub des Ventilkörpers des Steckers erreicht wird, ist wiederum von der mengenströmung abhängig.

Der Erfindung liegt die Aufgabe zugrunde, eine Schnellverschlußkupplung der eingangs beschriebenen Art aufzuzeigen, bei der der Stecker sowohl drucklos als auch unter Druck stehend gekuppelt werden kann und bei der in beiden Fällen eine Verriegelung der beiden Ventilkörper mit großer Betriebssicherheit erreicht wird. Die Verriegelung der beiden Ventilkörper bei drucklos gekuppeltem Stecker soll sofort nach Beendigung des Kuppelvorgangs eintreten, noch bevor die muffenseitige Druckmittelquelle eingeschaltet ist. Der Stecker soll auch dann aus der Muffe herausziehbar sein, wenn er unter Druck stehend gekuppelt wurde und muffenseitig die Druckquelle noch nicht eingeschaltet worden ist, wie es bei einem versehentlich in die falsche Muffe eingekuppelten Stecker der Fall ist.

Erfindungsgemäß wird dies dadurch erreicht, daß der Sternkörper der Muffe in seinem Kupplungskörper gegen die Kraft der zugehörigen Schließfeder und der Kupplungskörper der Muffe in der Schiebehülse gegen die Kraft der Gesperrefeder verschiebbar gelagert ist, daß die Sperrmittel aus einer abdeckbaren Verriegelungsnut im Schaft des Ventilkörpers und einem vom Sternkörper geschleppten Verriegelungsmittel besteht, und daß im Bewegungsbereich des von dem Kupplungskörper geführten Sternkörpers ein mit der Schiebehülse verbundener gehäuseseitiger Anschlag derart vorgesehen ist, daß innerhalb des einfachen Ventilkörperhubes zwischen dem Ventilkörper und dem Kupplungskörper der Sternkörper auf den gehäuseseitigen Anschlag auftrifft und damit zwischen Ventilkörper und Sternkörper ein Überhub entsteht, während dessen Durchlaufen die Verriegelungsnut abgedeckt ist, während bei dem anschließenden Rückhub zwischen Ventilkörper und Sternkörper die Verriegelungsnut zur Verriegelung der beiden Ventilkörper durch das Verriegelungsmittel freigegeben ist. Teilt man die bekannten Kupplungen je nach ihrer speziellen Ausbildung und ihrem Anwendungsgebiet in die drei Gruppen Abreißkupplungen, normale Kupplungen und Rohrabreißkupplungen ein, dann zeigt die Kupplung nach der DE-OS-30 05 490 am Beispiel einer Abreißkupplung bzw. einer normalen Kupplung bereits die Lösung der Aufgabe, auch dann eine Verriegelung der beiden Ventilkörper in der Offenstellung zu erreichen, wenn ein druckloser Stecker gekuppelt wird. Der Anmeldungsgegenstand bezieht sich auf eine Rohrabreißkupplung, wie sie auch in der US-A-3 791 411 dargestellt ist. Bei solchen Rohrabreißkupplungen ist das Gehäuse der Muffe und die Schiebehülse für das Kugelgesperre einteilig ausgebildet bzw. fest miteinander verbunden ; am Aussenumfang der Schiebehülse bzw. des Gehäuses befinden sich Nuten, mit denen die Muffe ortsfest verankert bzw. gelagert wird. Die Schiebehülse kann also gegenüber dem Gehäuse nicht betätigt und nicht bewegt werden ; es ist lediglich möglich, den Stecker in die Muffe hineinzudrücken bzw. herauszuziehen. Bei solchen Rohrabreißkupplungen ist der Kupplungskörper der Muffe in der Schiebehülse und damit im Gehäuse gegen die Kraft der Gesperrefeder verschiebbar gelagert. Damit ergibt sich beim Kuppeln und beim Entkuppeln ein typischer Bewegungsablauf des Kupplungskörpers relativ zur Schiebehülse bzw. zum Gehäuse. Die vorliegende Erfindung nutzt in geschickter Weise diesen typischen Bewegungsablauf, um auch bei Rohrabreißkupplungen eine Verriegelung der beiden Ventilkörper dann zu erreichen, wenn ein druckloser. Stecker gekuppelt wird. Selbstverständlich wird die Verriegelungsstellung auch erreicht, wenn ein unter Druck stehender Stecker gekuppelt wird. Wesentliches Merkmal der Erfindung ist ein mit der Schiebehülse verbundener gehäuseseitiger Anschlag, der mit dem Sternkörper zusammenarbeitet, der wiederum axial verschiebbar im Kupplungskörper gelagert ist. Die axiale Verschiebbarkeit des Sternkörpers wird durch Anschläge begrenzt. Der Sternkörper ist zwischen diesen Anschlägen durch die Schließfeder des Ventilkörpers vorgespannt bzw. gefesselt gelagert. Hierdurch ergibt sich eine ganz eigenartige Relativbewegung zwischen dem Sternkörper und dem Schaft des Ventilkörpers der Muffe. Diese Relativbewegung wird dazu ausgenutzt, um bei einer Bewegung, bei der sich der Ventilkörper dem Sternkörper relativ nähert, bei der also der Schaft des Ventilkörpers durch den Sternkörper nach hinten hindurchtaucht, die Verriegelungsnut im Schaft des Ventilkörpers abgedeckt wird, so daß eine Blockierung bzw. Verriegelung in diesem Teil der Bewegung, die auch als Überhub bezeichnet ist, nicht eintreten kann. Gegen Ende des Kuppelvorgangs eines drucklosen Steckers findet dann infolge der anschlaggesteuerten Bewegung des Sternkörpers eine Relativbewegung zwischen dem Ventilkörper und dem Sternkörper statt, die entgegengesetzt zu dem Überhub verläuft, als Rückhub bezeichnet ist und bei dem sich der Ventilkörper relativ zum Sternkörper wieder etwas entfernt. Bei diesem Rückhub muß die Verriegelungsnut im Schaft des Ventilkörpers für den Einfall des Sperrmittels frei sein, darf also nicht abgedeckt sein. Grundlegend für dieseBewegungsgeometrie ist die Überlegung, daß das Sperrmittel bei einer Annäherung zwischen Ventilkörper und Sternkörper in die abgedeckte Verriegelungsnut nicht einfallen kann, dagegen bei einer entgegengesetzten Bewegung, genannt Rückhub, das Sperrmittel in die Verriegelungsstellung einfällt. Diese beiden Bewegungen, nämlich der Überhub und der Rückhub, treten hinsichtlich ihrer Bewegungsrichtung sowohl dann auf, wenn ein druckloser Stecker gekuppelt wird, als auch dann, wenn ein unter Druck stehender Stecker gekuppelt wird. In letzterem Falle ist lediglich der Überhub vergleichsweise größer. Da ein solcher größerer Überhub jedoch ebenfalls nicht zum Erreichen der Verriegelungsstellung führt, da diese erst während des anschließenden Rückhubes erreicht wird, werden die beiden Ventilkörper des Steckers und der Muffe in der gekuppelten Stellung in jedem Falle verriegelt, gleichgültig, ob ein druckloser oder ein unter Druck stehender Stecker gekuppelt worden ist.

Als Verriegelungsmittel kann eine vom Sternkörper geschleppte, in der Verriegelungsstellung in die im Schaft des Ventilkörpers angeordnete Verriegelungsnut eingreifende Verriegelungsfeder vorgesehen sein. Dabei kann der Sternkörper zum Abdecken der Verriegelungsnut während des Überhubes einen Aufnahmeabsatz zum Erfassen und zum Transport der Verriegelungsfeder über die Verriegelungsnut hinweg aufweisen. Dies bedeutet, daß die Verriegelungsfeder im wesentlichen radial arbeitet und in ihrer eingefallenen Stellung in die Verriegelungsnut die Bewegung der beiden Ventilkörper bei auftretenden Rückströmungen derart blockiert, daß sich diese über den Sternkörper an dem Kupplungskörper abstützen. Der Aufnahmeabsatz unterfährt gleichsam während des Überhubes die Verriegelungsfeder und trägt diese über die Verriegelungsnut hinweg. Während des Rückhubes kommt die Verriegelungsfeder von dem Aufnahmeabsatz frei und wird von dem Sternkörper relativ gesehen rückwärts gegenüber dem Schaft des Ventilkörpers mitgeschleppt, so daß sie jetzt gegen Ende der Bewegung in die Verriegelungsnut einfällt und damit die Verriegelungsstellung erreicht wird.

Eine andere Möglichkeit besteht darin, daß als Verriegelungsmittel eine vom Sternkörper geschleppte, in der Verriegelungsstellung in die im Schaft des Ventilkörpers angeordnete Verriegelungsnut eingreifende Verriegelungsfeder und eine Kulisse vorgesehen ist, die den Schaft des Ventilkörpers umgebend relativ zu diesem begrenzt verschiebbar gelagert ist und zum Abdecken der Verriegelungsnut während des Überhubes eine Spreizwandung zum Erfassen der Verriegelungsfeder über die Verriegelungsnut hinweg und eine Verengung zur Freigabe der Verriegelungsnut während des Rückhubes aufweist. Die Kulisse kann in verschiedener Weise ausgebildet sein. Sie übernimmt bei dieser Ausführungsform einen Teil der Funktionen, die bei dem zunächst gezeigten Ausführungsbeispiel von dem Sternkörper, insbesondere dessen Aufnahmeabsatz wahrgenommen wurden. Die Verriegelungsfeder selbst braucht nicht unbedingt eine axiale Bewegungsmöglichkeit relativ zum Sternkörper zu haben. Es ist sogar möglich, daß die Verriegelungsfeder mit ihren nicht mit der Verriegelungsnut im Schaft des Ventilkörpers zusammenarbeitenden Schenkeln im Sternkörper eingehängt bzw. in diesem gelagert ist. Auf jeden Fall ist aber die Kulisse relativ zum Sternkörper begrenzt beweglich gelagert, und zwar so, daß die Verriegelungsnut beim Überhub abgedeckt, beim Rückhub dagegen freigegeben wird, so daß beim Rückhub die Verriegelungsstellung durch die Verriegelungsfeder erreicht und die damit die Blockierwirkung eintreten kann.

Die Verriegelungsfeder ist zwischen Sternkörper und Schaft des Ventilkörpers der Muffe eingeschaltet, wobei der Sternkörper beidendig je eine die Verschiebung der Verriegelungsfeder relativ zum Schaft des Ventilkörpers der Muffe bewirkende Stirnflächen sowie eine die Verriege-

lungsstellung sichernde Verriegelungsfläche auf-weist. Die Verriegelungsfläche bildet in der Verriegelungsstellung einen Anschlag für die Verriegelungsfeder, an der sich wiederum der Schaft des Ventilkörpers und damit auch der Ventilkörper des Stekkers bei auftretenden Rückströmungen abstützen.

Die Verriegelungsfeder kann mindestens sich etwa rechtwinklig zur Achse des Schaftes des Ventilkörpers erstreckende und sich tangential an den Umfang des Schaftes federnd anlegende Schenkel aufweisen. Der eine Schenkel ist vor dem Sternkörper und der andere Schenkel hinter dem Sternkörper angeordnet, wobei die Schenkel durch einen Bügel miteinander verbunden sind. Jeder Schenkel arbeitet dann mit dazugehörigen Stirnfläche bzw. Verriegelungsfläche an dem Sternkörper zusammen. Die Verriegelungsfeder kann auch doppelt ausgebildet sein und trotzdem aus einem Stück bestehen. Dann befinden sich zwei Schenkel vor dem Sternkörper und zwei Schenkel hinter dem Sternkörper.

Die Kulisse kann in einer Ausführungsform aus einem Verschiebebügel mit beidendig den Schaft des Ventilkörpers umfassenden Ohren bestehen, wobei für die begrenzt verschiebbare Lagerung auf dem Schaft ein einen Mitnahmeanschlag für das eine Ohr bildende Sicherungsring vorgesehen ist. Die Anordnung dieses Sicherungsrings gibt eine größere Betriebssicherheit, als wenn die Verriegelungsfeder nur in eine Nut eingreift, wie dies bei dem ersten Ausführungsbeispiel der Fall ist. Der Verschiebebügel kann zwischen der Stirnfläche des Sternkörpers und dem Sicherungsring verschiebbar gelagert sein. Freilich arbeitet das andere Ohr auch mit dem Ring am Kopf des Ventilkörpers der Muffe zusammen, wenn die betreffende Relativlage erreicht ist.

Eine in Herstellungs-technischer Sicht besondere vorteilhafte Ausführungsform, die auch mit großer Betriebssicherheit verbunden ist, wird dann erreicht, wenn die Kulisse aus einem Schubrohr besteht, welches den Schaft des Ventilkörpers umfassend in einer Durchbrechung des Sternkörpers gelagert ist. In diesem Fall führt sich also der Schaft des Ventilkörpers nicht unmittelbar in der Durchbrechung des Sternkörpers, sondern zunächst einmal in dem Schubrohr, welches seinerseits wiederum in der dann möglicherweise größeren Durchbrechung im Sternkörper verschiebbar gelagert ist. Dieses Schubrohr besitzt stirnseitig zwei Enden, die wiederum als Anschläge wirken und einmal mit dem Sicherungsring und zum anderenmit dem Ring im Bereich des Kopfes des Ventilkörpers zusammenarbeiten. Auch dieses Schubrohr muß eine Spreizwandung und eine Verengung aufweisen, damit die Verriegelungsnut am Schaft des Ventilkörpers beim Überhub abgedeckt und beim Rückhub freigegeben wird.

Im Schaft des Ventilkörpers der Muffe können Nuten zur Vergrößerung der Reibung zwischen Verriegelungsfeder und Schaft des Ventilkörpers vorgesehen sein, die eine Tiefe aufweisen, die etwa dem wirksamen Durchmesser des Aufnahmeabsatzes entspricht. Diese Nuten sind also vergleichsweise weniger tief als die Verriegelungsnut und dienen dazu, beispielsweise die Ausgangsstellung der Verriegelungsfeder zu sichern. Die Nuten weisen nur eine solche Tiefe auf, daß die Verriegelungsfeder von dem Aufnahmeabsatz ergriffen bzw. unterfahren werden kann.

Die Verriegelungsfeder nimmt auf dem Schaft des Ventilkörpers bei geschlossenem Ventilkörper eine Ausgangsstellung ein, gegenüber der die Verriegelungsnut um eine sich aus dem Überhub und dem Rückhub ergebene Strecke entfernt angeordnet ist. Diese Strecke muß nur so groß sein, daß durch die verschiedenen Bewegungsrichtungen das Abdecken bzw. Freigeben der Verriegelungsnut erfolgen kann. Die Strecke zwischen der Ausgangsstellung der Verriegelungsfeder und der Verriegelungsnut ist damit in aller Regel kleiner als der einfache Ventilkörperhub. Dies hängt davon ab, wie weit der Sternkörper von dem gehäuseseitigen Absatz in der Ausgangsstellung entfernt angeordnet ist.

Der Schaft des Ventilkörpers der Muffe ist gegenüber dem Sternkörper um mindestens den doppelten Ventilkörperhub verschiebbar gelagert, damit auch ein unter Druck stehender Stecker gekuppelt werden kann und der Sternkörper das Hindurchtauchen des Schaftes des Ventilkörpers nicht behindert. Auch in diesem Falle tritt ein Überhub und ein Rückhub auf, die vergleichsweise größer sind. Es wird aber die identische Endstellung, nämlich die Verriegelungsstellung, erreicht. Dies tritt spätestens dann ein, wenn der unter Druck stehende Ventilkörper des Steckers durch den muffenseitig einwirkenden Pumpendruck geöffnet wird.

Die Verriegelungsfeder wird von dem Sternkörper mit axialem Spiel geschleppt, damit die Verriegelungsfeder einmal von dem Aufnahmeabsatz ergriffen und zum anderen von diesem freigegeben werden kann.

Die Kraft der Schließfeder der Muffe entspricht etwa der Kraft der Schließfeder des Steckers, so daß beim Kuppeln eines drucklosen Steckers beide Ventilkörper gegenüber ihren Schließfedern einfedern. Geringfügige Kraftunterschiede der beiden Federn wirken sich nicht nachteilig auf die Funktion aus. Insbesondere kann die Schließfeder des Ventilkörpers des Steckers auch mit einer größeren Federkraft versehen sein. Für den Funktionsablauf ist dies nicht nachteilig, weil sich dann ein druckloser Stecker mit der gleichen Bewegungsabfolge kuppelt wie ein unter Druck stehender Stecker. Es ist aber zu beachten, daß während des Kupplungsvorganges die Summe der Kräfte der beiden Schließfedern und der Gesperrefeder überwunden werden müssen, so daß es sich für eine leichte Betätigung empfiehlt, die Kräfte der Federn nicht allzu groß zu wählen. Ausführungsbeispiele der Erfindung sind in der Zeichnung dargestellt und werden im Folgenden näher beschrieben. Es zeigen:

Figur 1  einen Schnitt durch die Muffe,
Figur 2  einen Schnitt durch den Stecker,

Figur 3 eine Ansicht des Sternkörpers mit Verriegelungsfeder,

Figur 4 eine Ansicht der Verriegelungsfeder,

Figur 5 eine Draufsicht auf die Verriegelungsfeder,

Figuren 6-10 verschiedene Zwischentellungen der Kupplung beim Einkuppeln eines drucklosen Stekkers,

Figuren 11-13 verschiedene Zwischenstellungen beim Auskuppeln eines drucklosen Steckers,

Figuren 14-17 verschiedene Stellungen beim Einkuppeln eines unter Druck stehenden Steckers,

Figuren 18-19 verschiedene Stellungen beim Auskuppeln eines unter Druck stehenden Steckers ohne vorheriges Öffnen des Ventilkörpers des Steckers,

Figuren 20-26 verschiedene Zwischenstellungen der Kupplung in einer zweiten Ausführungsform beim Einkuppeln eines drucklosen Steckers,

Figur 27 eine Seitenansicht der als Verschiebebügel ausgebildeten Kulisse und

Figur 28 eine Ansicht der als Schubrohr ausgebildeten Kulisse.

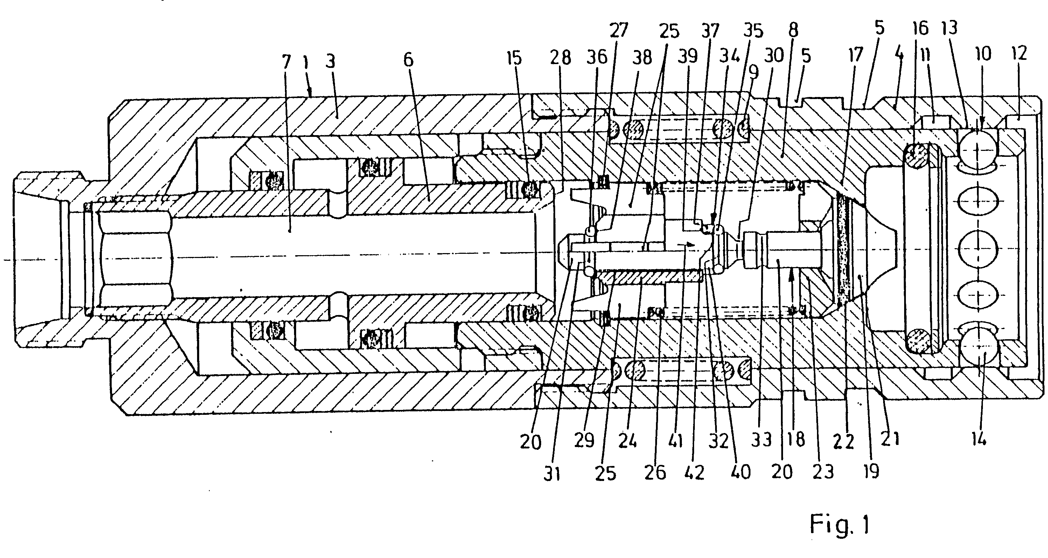

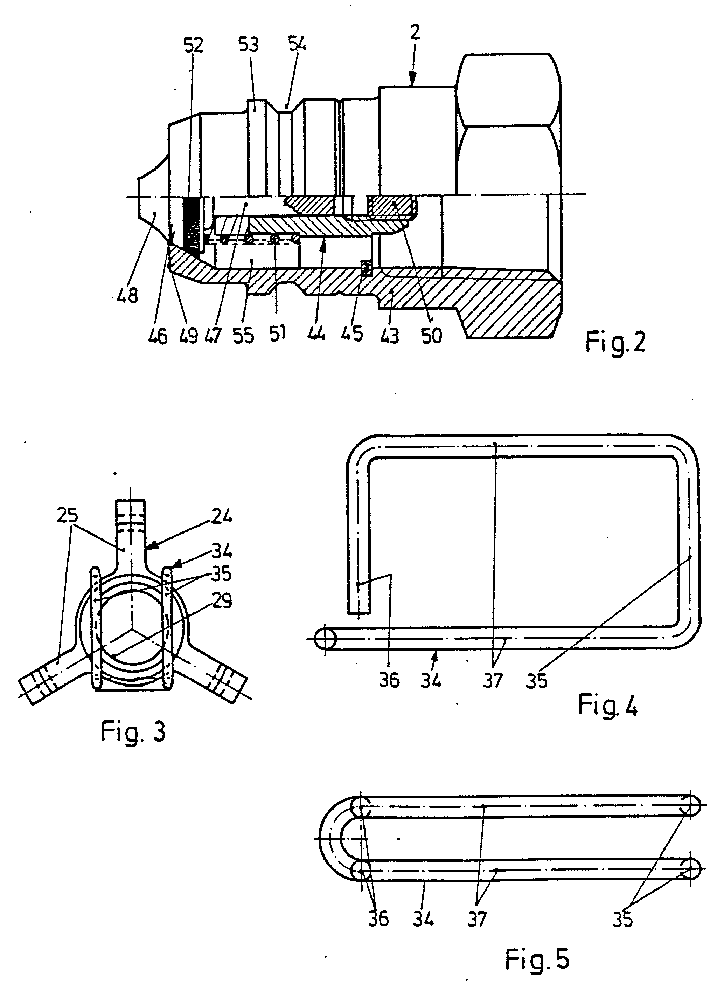

In Fig. 1 ist die Muffe 1 dargestellt, während Fig. 2 den zugehörigen Stecker 2 zeigt. Die Muffe 1 besitzt ein Gehäuse 3, mit dem über ein Gewinde eine Schiebehülse 4 fest verbunden ist. Die Schiebehülse 4 ist also gegenüber dem Gehäuse 3 nicht beweglich, sondern wird üblicherweise über Nuten 5, beispielsweise in einer Schottwandung, ortsfest gelagert. Ein Fortsatz 6 steht ebenfalls mit dem Gehäuse 1 in fester Verbindung und ragt in den Innenraum der Muffe 1 ein, wo er einen Großteil der axialen Durchgangsbohrung 7 der Muffe 1 bildet. Innerhalb bzw. zwischen diesen gehäusefesten Teilen 1, 4, 6 ist ein Kupplungskörper 8 über eine Gesperrefeder 9 begrenzt verschiebbar gelagert bzw. gefesselt geführt. Zwischen Schiebehülse 4 und Kupplungskörper 8 ist ein übliches Kugelgesperre 10 angeordnet, welches aus den beiden Ausweichnuten 11 und 12 und einem dazwischenliegenden Verriegelungsring 13 an der Schiebehülse 4 und aus in Durchbrechungen des Kupplungskörpers 8 gelagerten Kugeln 14 besteht. Mit dem Kupplungskörper 8 arbeitet eine am Fortsatz 6 gelagerte Dichtung 15 zusammen. Eine Dichtung 16 ist für die Abdichtung des Steckers 2 in der Muffe 1 vorgesehen.

Der Kupplungskörper 8 besitzt einen eingezogenen Rand 17, mit dem ein Ventilkörper 18, der einen Kopf 19 und einen Schaft 20 besitzt, zusammenarbeitet ; der Kopf 19 ragt über eine am eingezogenen Rand 17 gebildete Stirnfläche 21 um den einfachen Ventilkörperhub in Richtung auf das Kugelgesperre 10 aus und bildet andererseits mit dem eingezogenen Rand 17 des Kupplungskörpers 8 ein Rückschlagventil 17, 19. Zu diesem Zweck ist auf dem Kopf 19 eine Dichtung 22 angeordnet.

Auf dem Schaft 20 des Ventilkörpers 18 ist ein mit drei abstehenden Flügeln ausgestatteter Ring 23 aufgeschoben, der sich am Kopf 19 des Ventilkörpers 18 abstützt. Ähnlich gleitend verschiebbar in dem Kupplungskörper 8 und auf dem Schaft 20 des Ventilkörpers 18 ist ein Sternkörper 24 gelagert, der ebenfalls über den Umfang verteilt drei abstehende Flügel 25 besitzt, so daß auf diese Art und Weise weder im Bereich des Ringes 23 noch im Bereich des Sternkörpers 24 die Durchströmung des Kupplungskörpers 8 behindert wird, wenn das Rückschlagventil 17, 19 geöffnet ist. Zwischen dem Ring 23 und dem Sternköper 24 ist eine Schließfeder 26 in der dargestellten Weise angeordnet. Es handelt sich dabei um die Schließfeder 26 des Ventilkörpers 18 bzw. des Rückschlagventils 17, 19. Die Beweglichkeit des Sternkörpers 24 ist durch einen im Kupplungskörper 8 eingesetzten Sicherungsring 27 begrenzt, an dem sich letztlich auch die Schließfeder 26 abstützt, so daß das Rückschlagventil 17, 19, wie dargestellt, in der Schließlage gehalten ist.

Für die Steuerung der axialen Beweglichkeit des Sternkörpers 24 in dem Kupplungskörper 8 besitzt der Fortsatz 6 einen gehäuseseitigen Anschlag 28, mit dem das hintere Ende des Sternkörpers 24 zusammenarbeitet, und, wie später ausführlich aufgezeigt wird, der Sternkörper 24 unter Zusammendrückung der Schließfeder 26 von dem Sicherungsring 27 abgehoben und bewegt wird. Die Schließfeder 26 ist jedoch vorgespannt, so daß der Sternkörper 24 immer dann, wenn er nicht an dem gehäuseseitigen Anschlag 28 anliegt, gegen den Sicherungsring 27 in Anlage gehalten wird.

Der Schaft 20 des Ventilkörpers 18 ist in dem Sternkörper 24 in einer dort vorgesehenen zentrisch angeordneten Durchbrechung 29 axial verschieblich geführt. Er besitzt eine Verriegelungsnut 30, die tiefer ausgebildet ist als verschiedene weitere Nuten 31, 32 und 33, die zur Reibungserhöhung vorgesehen sind. Zwischen dem Sternkörper 24 und dem Schaft 20 des Ventilkörpers 18 ist als Sperrmittel eine Verriegelungsfeder 34 vorgesehen, die von dem Sternkörper 24 auf dem Schaft 20 des Ventilkörpers 18 je nach der Relativbewegung der Teile zueinander verschoben bzw. mitgeschleppt wird. Die Verriegelungsfeder 34 besitzt Schenkel 35, die der Verriergelungsnut 30 zugeordnet sind, und die sich tangential zu den Nuten 30, 32, 33 erstrecken und radial auf- bzw. zusammenfedern, je nach der Kontur, die der Schaft 20 des Ventilkörpers den Schenkeln 35 gerade bietet. Am anderen Ende der Verriergelungsfeder sind analog Schenkel 36 vorgesehen, die der Nut 31 zugeordnet sind. Die Schenkel 35 und 36 sind durch Federbügel 37 miteinander verbunden. Die Verriegelungsfeder 34 ist aus einem einzigen Stück Federdraht gebogen und besitzt eine Formgebung, die aus den Fig. 4 und 5 ersichtlich ist. Die Verriegelungsfeder 34 ist so mit Spiel auf den Sternkörper 24 aufgesetzt, wie dies aus der Zusammenschau der Fig. 1 und 3 hervorgeht. Der Sternkörper 24 besitzt zugeordnet zu den Schenkeln 36 eine Stirnfläche 38 und an seinem anderen Ende eine Stirnfläche 39 für die die Schenkel 35. Ebenfalls an dieser Seite des Sternkörpers 24 ist ein Aufnahmeabsatz 40 gebildet, auf den sich die Schenkel 35 bei entsprechender Relativbewegung aufsetzen können, so daß sie an einem Eintritt die Verriegelungsnut 30 gehindert sind und von dem Sterkörper 24 über die Verriegelungsnut 30 hinwegtransportiert werden können. Die Aufnahme der Schenkel 35 in dem Aufnahmeabsatz 40 geschieht gleichsam durch ein Unterfahren der Schenkel 35 bzw. durch ein Überspringen unter geringfügigem Auffedern der Schenkel 35, wenn der Sterkörper 24 gegenüber dem Schaft 20 im Sinne eines Pfeils 41 bewegt wird. Diese Bewegung gemäß Pfeil 41 wird als ÜPberhub bezeichnet, während eine Bewegung entgegengesetzt zum Pfeil 41 als Rückhub bezeichnet wird. Am Sternkörper 24 ist außer den beiden Stirnflächen 38 und 39 noch eine Verriegelungsfläche 42 gebildet. Wenn sich die Schenkel 35 der Verriegelungsfeder 34 in der Verriegelungsnut befinden, stützen sie sich an der Verriegelungsfläche 42 ab und blockieren damit jedes weitere Einschieben des Schaftes 20, des Ventilkörpers 18 relativ zu dem Sternkörper 24. Es ist dann die sogenannte Verriegelungsstellung für die beiden Ventilkörper von Muffe 1 und Stecker 2 erreicht.

Der in Fig. 2 dargestellte Stecker 2 besitzt ein Gehäuse 43, in dem ebenfalls ein Sternkörper 44 mit drei Flügeln über den Umfang mit Hilfe eines Sicherungsrings 45 gelagert ist. Im Sternkörper 44 ist ein Ventilkörper 46 mit seinem Schaft 47 um den einfachen Ventilkörperhub verschiebbar gelagert. Auch hier steht ein Kopf 48 des Ventilkörpers 46 um den einfachen Ventilkörperhub gegenüber einer Stirnfläche 49 am Gehäuse über. Während der Ventilkörper 18 der Muffe 1 den doppelten Ventilkörperhub (und mehr) zurücklegen kann, ist die Bewegungsmöglichkeit des Ventilkörpers 46 durch eine im Sternkörper 44 mit Hilfe eines Gewindes verstellbar gelagerter Anschlagschraube 50 begrenzt. Zu dem Ventilkörper 46 gehört eine Schließfeder 51, die sich andererseits an dem Sternkörper 44 abstützt. Die Schließfeder 51 ist in ihrer Kraft und ihren sonstigen Eigenschaften wie die Schließfeder 26 des Ventilkörpers 18 der Muffe 1 ausgebildet. Es können also hier ggf. gleiche Schließfedern 26 und 51 eingesetzt werden. Es versteht sich, daß der Kopf 48 des Ventilkörpers 46 mit einer Dichtung 52 versehen ist. Das Gehäuse 43 des Stekkers 2 besitzt einen umlaufenden Bund 53 und nachfolgend eine Verkeilungsnut 54 für den Eintritt der Kugeln 14 in der gekuppelten Stellung bzw. für das Zusammenwirken mit dem Kugelgesperre 10. Die Ausbildung des Steckers 2 ist an sich bekannt. Ein solcher Stecker 2 kann mit einer Muffe 1 einmal dann gekuppelt werden, wenn der Stecker 2 drucklos ist, sich also im Innenraum 55 kein unter Druck stehendes Medium befindet. In einem solchen Falle wird angenommen, daß beim Kuppeln der Ventilkörper 46 seine Schließstellung gegen die Kraft der Schließfeder 51 verlassen kann und sich in Richtung auf die Anschlagschraube 50 bewegt. Andererseits kann aber im Innenraum 55 eines Steckers 2 und damit in der an diesem angeschlossenen Leitung ein Medium unter Druck eingesperrt sein, wobei der Druck dann den Ventilkörper 46 zusätzlich in Schließrichtung beaufschlagt. In einem solchen Fall wird angenommen, daß sich beim Kuppeln (manueller Teil) der Ventilkörper 46 aus seiner Schließlage am Gehäuse 43 nicht bewegen läßt, also seine geschlossene Stellung beibehält. Das Öffnen des am Stecker 2 gebildeten Rückschlagventils geschieht dann nach vollendetem Kuppelvorgang durch den muffenseitig einsetzenden Druck einer Druckquelle, beispielsweise eines Hydraulikmotors oder eines Kompressors.

Die einzelnen Teile der Muffe 1 und des Steckers 2 besitzen die aus den Fig. 1 und 2 ersichtlichen geometrischen Abmessungen.

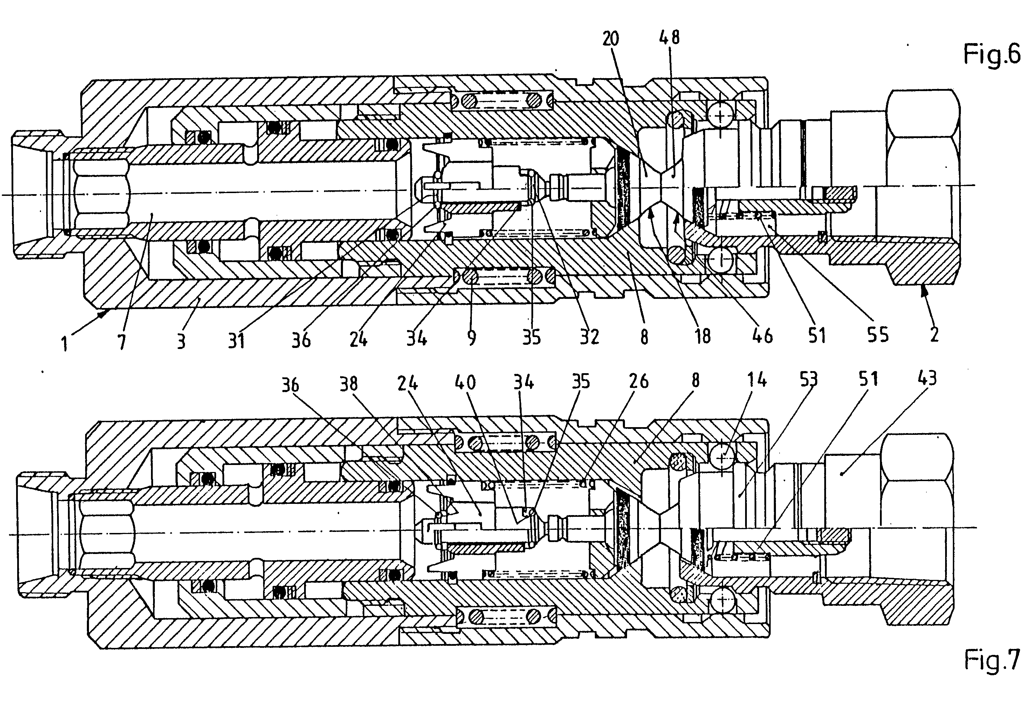

Die Wirkungsweise der Schnellverschlußkupplung soll im Folgenden für verschiedene Bewegungsabläufe und verschiedene Kupplungsweisen anhand aufeinanderfolgender Schaubilder der Fig. 6 - 19 aufgezeigt werden. Dabei ist durch die Bildfolge der Fig. 6 - 10 veranschaulicht, welche Relativlage die einzelnen Teile der Kupplung beim Einkuppeln eines drucklosen Steckers 2 jeweils zueinander einnehmen :

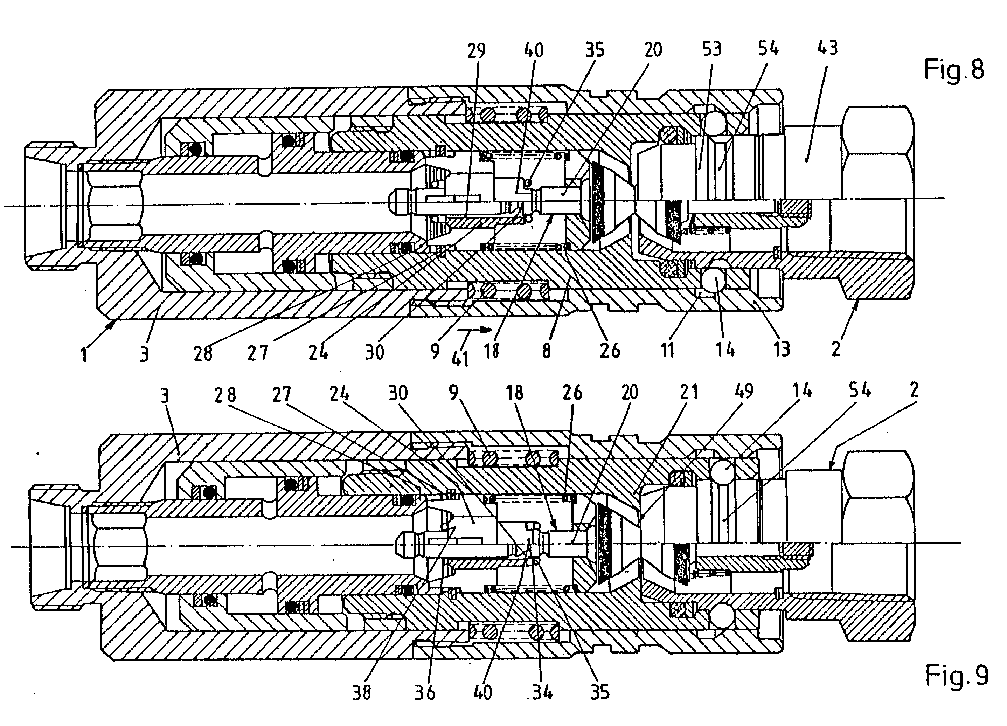

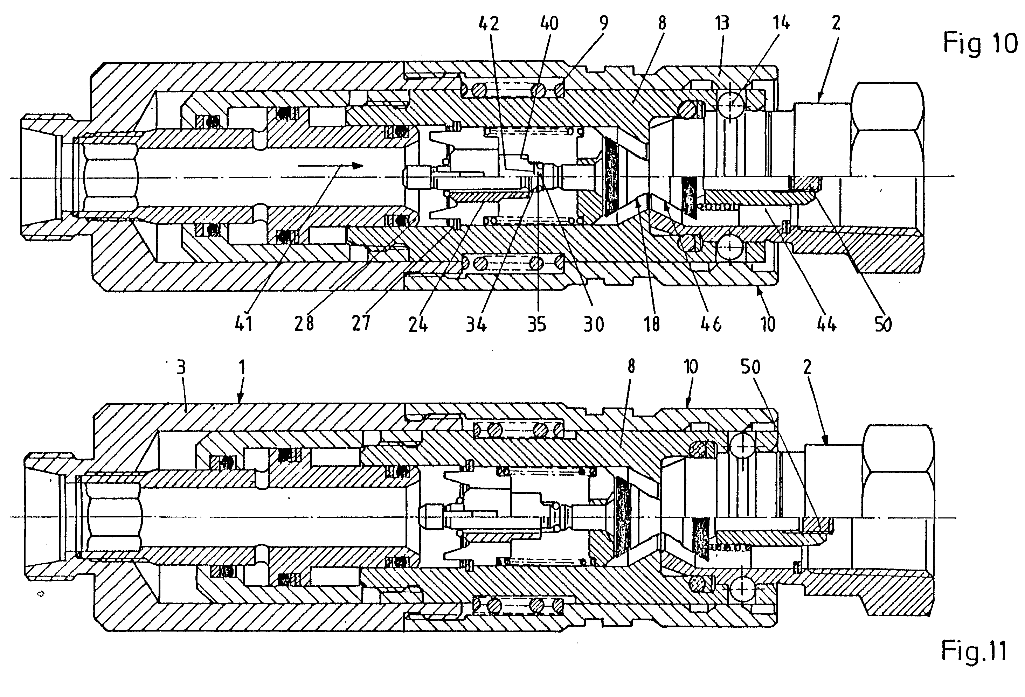

In der Ausgangsstellung nehmen die Teile, die aus den Fig. 1 und 2 bekannte Ausgangsstellung ein. Beide Ventilkörper 18 und 46 befinden sich in der Schließlage. Der Innenraum 55 des Steckers 2 ist drucklos, ebenso die Durchgangsbohrung 7 in der Muffe 1. Beim Einschieben des Steckers 2 in die Muffe 1 gelangen die überstehenden Köpfe 19 und 48 der beiden Ventilkörper 18 und 46 gemäß Fig. 6 aneinander zur Anlage. Beim weiteren Eindrücken des Steckers 2 in die Muffe 1 wird die Stellung der Teile gemäß Fig. 7 erreicht, d. h. beide Ventilkörper 18 und 46 öffnen, wobei vorausgesetzt ist, daß die Kräffe der Schließfedern 26 und 51 etwa gleich groß sind. Demzulfolge wird auch der Öffnungsweg jedes einzelnen Ventilkörpers etwa gleich groß sein. Der Bund 53 am Gehäuse 43 des Steckers 2 legt sich an den Kugeln 14 des Kugelgesperres 10 an. Durch die geringfügige Verschiebung des Ventilkörpers 18 entgegengesetzt dem Pfeil 41 (Fig. 1) relativ zum insoweit unveränderten Sternkörper 24 kommen die Schenkel 36 der Verriegelungsfeder 34 außer Anlage von der Stirnfläche 38, während sich die Schenkel 35 dem Aufnahmeabsatz 40 nähern. Beim weiteren Einschieben des Steckers in die Muffe zwischen den Darstellungen der Fig. 7 und 8 wird zunächst der Kupplungskörper 8 über die Kugeln 14 des Kugelgesperres von dem Bund 53 am Stecker 2 mitgenommen und damit der Kupplungskörper 8, der Sternkörper 24 und der Ventilkörper 18 gemeinsam entgegengesetzt zum Pfeil 41 nach rückwärts veschoben. Dabei befinden sich die Kulgen 14 immer noch im Bereich des Verriegelungsrings 13 und noch nicht im Bereich der Ausweichnut 11. Während dieser Verschiebebewegung setzt der Sternkörper 24 auf dem gehäuseseitigen Anschlag 28 auf, so daß er damit gehäusefest gelagert wird, während die übrigen vorher erwähnten Teile weiter verschoben werden, und zwar entgegengesetzt zum Pfeil 41. Es versteht sich, daß während dieser Verschiebebewegung die Gesperrefeder 9 weiter gespannt wird. Der Sternkörper 24 verbleibt gehäusefest in Ruhe, so daß er selbst von dem Sicherungsring 27 außer Anlage kommt und die Schließfeder 26 zusammengedrückt wird. Während dieser Bewegung sind die Schenkel 35 von dem Aufnahmeabsatz 40 am Sternkörper 24 relativ unterfahren worden, so daß sie nicht in die Verriegelungsnut 30 einfedern können, sondern sich der Schaft 20 des Ventilkörpers 18 mit der Verriegelungsnut 30, die nun abgedeckt ist, durch die Durchbohrung 29 des Sternkörpers 24 hindurchschieben läßt. Während dieser Hindurchschiebebewegung, die auch als Eintauchen des Schaftes 20 in den Sternkörper 24 bezeichnet werden kann, gelangen die Kulgen 14 in den Bereich der Ausweichnut 11, so daß sie nach außen treten und den Bund 53 des Steckers unter sich hindurchlassen. Diese Zwischenstellung zeigt Fig. 8. Man sieht also, wie der gehäusefeste Anschlag 28 dazu ausgenutzt wird, in Verbindung mit der Bewegungsgeometrie der übrigen Teile auch bei Zurücklegen des einfachen Ventilkörperhubes einen Überhub zu realisieren, also eine relative Bewegung des Sternkörpers 24 in Richtung des Pfeiles 41, relativ zum Schaft 20, der grösser ist als es an sich dem einfachen Ventilkörperhub entspricht. Der Kupplungskörper 8 hat in der Stellung gemäß Fig. 8 seine maximale Eintauchtiefe im Gehäuse 3 erreicht. Die Kugeln 14 beginnen sich in den Bereich der Verkeilungsnut 54 am Gehäuse 43 des Steckers 2 zu verschieben, wo sie gemäß Fig. 9 eintreffen. Gleichzeitig kommt dabei die Stirnfläche 49 des Steckers 2 der Stirnfläche 21 der Muffe 1 maximal nahe, evtl. sogar unter Anschlag der Teile aneinander. Der Kupplungskörper 8 bewegt sich nun wieder relativ aus dem Gehäuse 3 heraus, so daß sich die Schließfeder 26 des Ventilkörpers 18 wieder ausdehnen kann und somit der Sternkörper 24 relativ zu dem Schaft 20 in Ruhe bleibt. Damit gerät (Fig. 9) die Verriegelungsfeder 34 mit ihren Schenkeln 35 aus dem Wirkungsbereich des Aufnahmeabsatzes 40 hinweg, während sich die Schenkel 36 an der Stirnfläches 38 des Sternkörpers 24 anlegen. Gemäß Fig. 9 ist der Sternkörper 24 gerade noch nicht zur Anlage an dem Sicherungsring 27 gekommen. Diese Bewegung setzt sich jedoch fort, bis die Stellung gemäß Fig. 10 erreicht ist, bei der sich die Kugeln 14 in der Mitte des Verriegelungsrings 13 befinden oder anders gesagt, die Gesperrefeder 9 eine weitere Verschiebung des Kupplungskörpers 8 nicht mehr bewirken kann. Durch Anlage des Kupplungskörpers 24 an dem Sicherungsring 27 gerät der Sternkörper außer Anlage von dem gehäusefesten Anschlag 28. Dabei nimmt der Sternkörper 24 die Verriegelungsfeder 34 soweit mit, bis deren nun nicht mehr durch den Aufnahmeabsatz 40 abgedeckte Schenkel 35 in der Verrielungsnut 30 einrasten (Fig. 10). Die Verriegelungsstellung ist erreicht. Der Ventilkörper 46 stützt sich an der Anschlagschraube 50 im Sternkörper 44 ab. Auftretende Rückströmungen also Durchströmungen der Kupplung von der Steckerseite her in Richtung auf die Muffenseite, also etwa entgegengesetzt dem Pfeil 41, können sich nicht mehr in einem Zuschlagen des Ventilkörpers 46 des Steckers 2 äussern, weil das Duo der Ventilkörper 46 und 18 von der in der Verriegelungsnut 30 eingerasteten Verriegelungsfeder 34 blokkiert ist. Die Verriegelungsfeder 34 stützt sich dabei an der Verriegelungsfläche 42 des Sternkörpers 24 ab, der seinerseits durch den Sicherungsring 27 am Kupplungskörper 8 gehalten ist. Über das Kugelgesperre 10 schließt sich der Kreis. Fig. 10 zeigt die gekuppelte Stellung zwischen Stekker 2 und Muffe 1 mit den beiden geöffneten Ventilkörpern 18 und 46, also in Bereitschaft zum Durchströmen in gleich welcher Richtung. Die beiden Ventilkörper 46 und 18 sind in jeder Richtung arretiert.

Die Bildfolge der Fig. 10 bis 13 und Fig. 6 verdeutlichen den Auskuppelvorgang eines drucklosen Steckers:

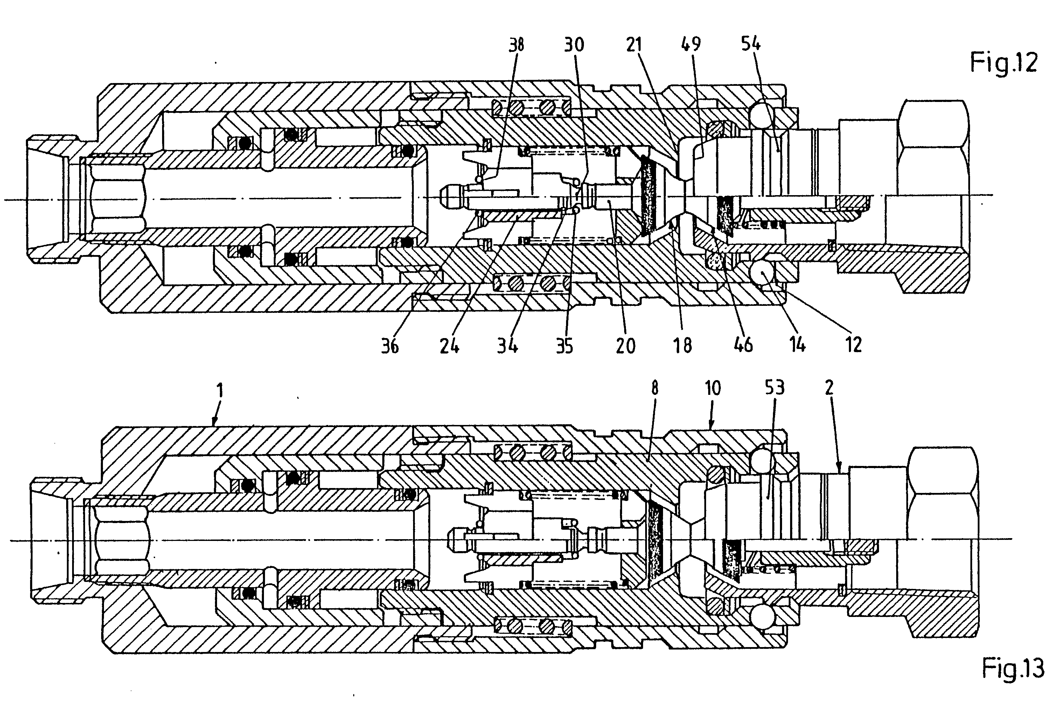

Ausgehend von der funktionsbereiten Stellung gemäß Fig. 10 wird gemäß Fig. 11 der Stecker 2 aus der Muffe 1 herausgezogen. Das Kugelgesperre 10 ist noch verrastet, so daß der Kupplungskörper 8 von dem Stecker 2 mitgenommen wird. An der Stellung der Teile im Kupplungskörper ändert sich zunächst gar nichts. Erst wenn gemäß Fig. 12 die Kugeln 14 in den Bereich der Ausweichnut 12 gelangen und damit eine Entriegelung des Kugelgesperres 10 möglich wird, in dem die Kugeln 14 aus der Verkeilungsnut 54 heraustreten, kann sich die Stirnfläche 49 von der Strinfläche 21 lösen und damit beide Ventilkörper 18 und 46 je im Sinne eines relativen Hubes auf die Schließstellung zu bewegen. Dabei bewegt sich auch der Ventilkörper 18 mit seinem Schaft 20 relativ aus dem Sternkörper 24 heraus. Dabei wird die Verriegelungsfeder 34 durch Anlage der Schenkel 36 an der Stirnfläche 38 mitgenommen, so daß die Schenkel 35 aus der Verriegelungsnut 30, die an dieser Stelle eine Schrägfläche aufweist, herausgehoben werden. Dieser Übergang ist durch die Fig. 12 und 13 verdeutlicht. Gemäß Fig. 13 wird die Verbindung zwischen dem Stecker 2 und dem Kupplungskörper 8 aufgehoben, da das Kugelgesperre 10 den Bund 53 des Steckers hat hindurchtreten lassen. Beide Ventilkörper bewegen sich in Richtung auf die Schließstellung, die gemäß Fig. 6 erreicht wird. Dabei rasten die Schenkel 35 in die Nut 32 und die Schenkel 36 in die Nut 31, so daß die Ausgangsstellung gemäß Fig. 6 erreicht ist. Lediglich die beiden Köpfe 48 und 20 der Ventilkörper 46 und 18 sind noch in Anlage. Beide Ventilkörper befinden sich in der Schließstellung. Durch vollständiges Herausziehen des Steckers 2 aus der Muffe 1 wird der Entkuppelvorgang beendet.

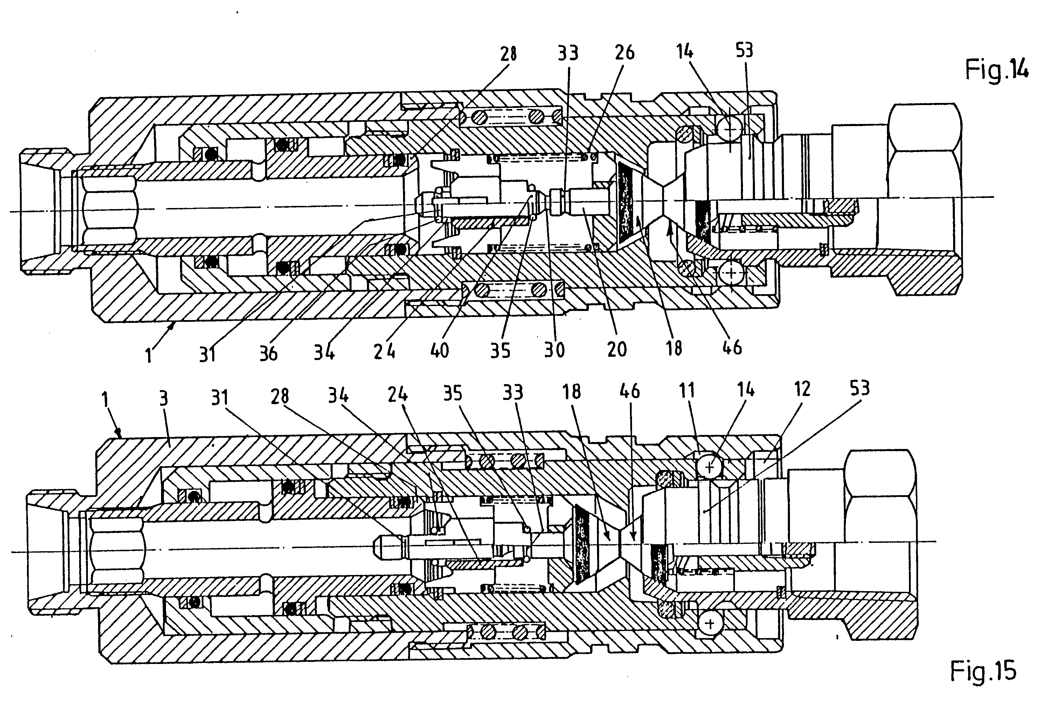

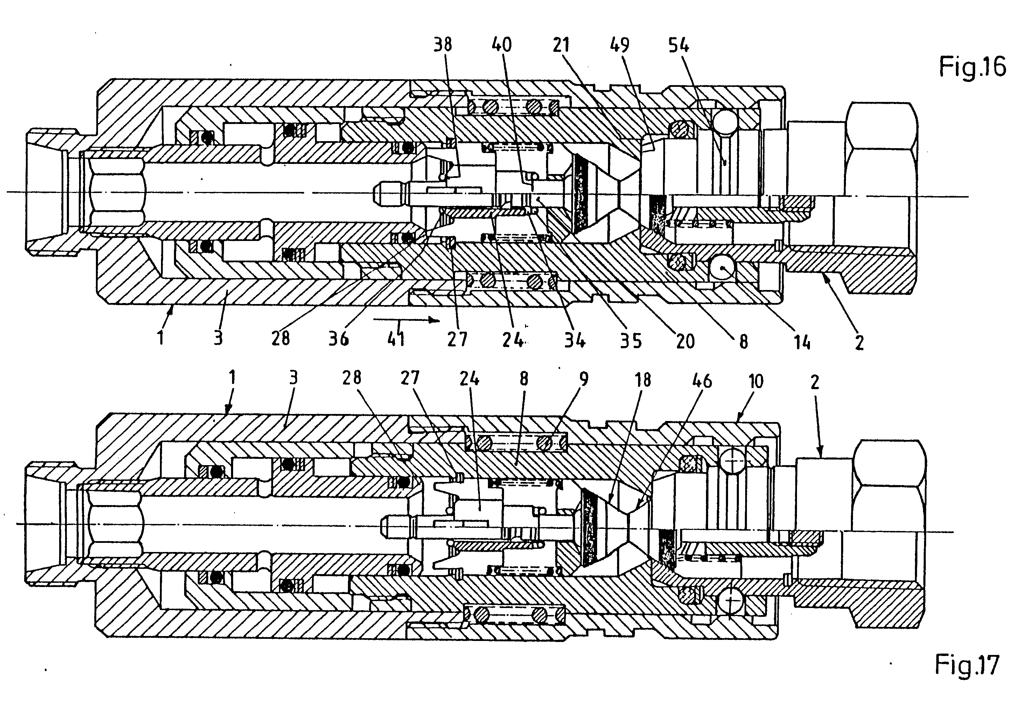

Verschiedene Stellungen beim Einkuppeln eines unter Druck stehenden Steckers 2 zeigen die Fig. 6, 14-17 und 10: Es wird jetzt angenommen, daß der Innenraum 55 unter Druck steht, so daß der Ventilkörper 46 des Steckers 2 während des Kuppelvorganges seine Schließlage beibehält und sich damit nicht entgegen der Schließfeder 51 bewegen kann. Es versteht sich, daß auch während dieses Kuppelvorganges die Muffe 1 drucklos ist. Gemäß Fig. 6 wird also der Stecker 2 in die Muffe 1 hineingeschoben bis die beiden Köpfe 48 und 20 zur Anlage kommen. Beim weiteren Einschieben legt sich gemäß Fig. 4 der Bund 53 an die Kugeln 14 an, wobei jetzt jedoch allein der Ventilkörper 18 einen vergleichsweise größeren Eintauchhub in den Sternkörper 24 durchgeführt hat. Dabei sind die Schenkel 35 von dem Aufnahmeabsatz 40 unterfahren worden, während die Schenkel 36 noch in der Nut 31 sind. Die Verriegelungsfeder 34 kann in dieser Stellung aber nicht in die Verriegelungsnut 30 einfedern. Beim weiteren Einschiebevorgang verschiebt sich über die Kugeln 14 des Kugelgesperres 10 der Kupplungsköper 8 und mit ihm der Sternkörper 24 und der Ventilkörper 18 gemeinsam so lange, bis der Sternkörper 24 an dem gehäuseseitigen Anschlag 28 zur Anlage kommt. In diesem Moment wird die Bewegung des Sternkörpers 24 beendet, während der Kupplungskörper 8 und der Ventilkörper 18 mit seinem Schaft 20 die Bewegung fortsetzen. Unter Zusammendrückung der Schließfeder 26 transportiert der Aufnahmeabsatz 40 die Schenkel 35 der Verriegelungsfeder 34 über die Verriegelungsnut 30 hinweg bis in einen Bereich, in welchem die Nut 33 angeordnet ist. Es wird die Stellung der Teile gemäß Fig. 15 erreicht. Da die Kugeln 14 in den Bereich der Ausweichnut 11 eintreten können, kann der Bund 53 unter den Kugeln hindurchtauchen, wobei jetzt der Ventilkörper 46 den Ventilkörper 18 noch weiter in den Sternkörper 24 hineinschiebt-nämlich jetzt entsprechend dem doppelten Ventilkörperhub. Dabei gelangen, wie dies Fig. 16 zeigt, die beiden Stirnflächen 49 und 21 aneinander zur Anlage, die Kugeln 14 fallen in die Verteilungsnut 54 und es beginnt eine Rückbewegung des Kupplungskörpers 8 mit dem Stecker 2 in Richtung des Pfeiles 41. Dabei bleibt der Sternkörper 24 stehen, so daß sich die Schenkel 35 der Verriegelungsfeder 34 von dem Aufnahmeabsatz 40 lösen können und gegen den Schaft 20 an diesem anliegend einfedern. Gleichzeitig gelangen die Schenkel 36 an der Stirnfläche 38 zur Anlage (Fig. 16). Der Sternkörper 24 kommt an dem Sicherungsring 27 zur Anlage und löst sich von dem gehäuseseitigen Anschlag 28, wobei die Teile jetzt die Relativlage einnehmen, wie dies Fig. 17 zeigt. Das Kugelgesperre 10 hat voll verriegelt. Der Ventilkörper 18 hat den doppelten Ventilkörperhub zurückgelegt. Der Ventilkörper 46 des Steckers 2 befindet sich noch in der Schließstellung. Um diese aufzuheben und die Stellung gemäß Fig. 10 zu erreichen, wird muffenseitig der Druck aufgebaut. Durch den Druck in der Durchgangsbohrung 7 wird auch der Ventilkörper 46 belastet und das Duo der aneinanderliegenden Ventilkörper 46 und 18 gemäß Pfeil 41 nach rechts verschoben, so daß dabei zwangsläufig der Ventilkörper 46 auf der Anschlagschraube 50 zur Anlage kommt und gleichzeitig die Verriegelungsfeder 34 in die Verriegelungsnut 30 einfedert, so daß die Gebrauchsstellung gemäß Fig. 10 erreicht ist.

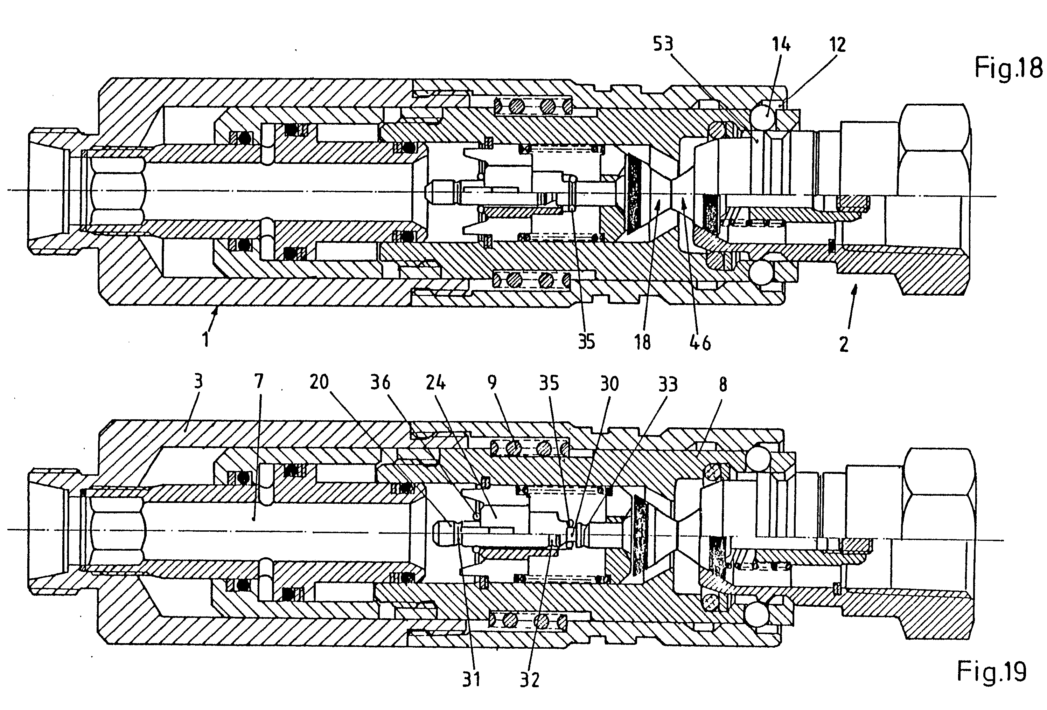

Die Bildfolge der Fig. 17-19 und 6 zeigt das Auskuppeln eines unter Druck stehenden Steckers, der versehentlich in eine falsche Muffe 1 eingekuppelt worden ist, also die Auskuppelmöglichkeit, ohne zuvor den muffenseitigen Druck aufzubauen. Die Teile befinden sich damit in der in Fig. 17 gezeigten Relativlage. Durch Ziehen an dem Stecker 2 wird über das in der Sperrstellung befindliche Kugelgesperre 10 der Kupplungskörper 8 herausgezogen bis die Kugeln 14 in den Bereich der Ausweichnut 12 gelangen, so daß der Bund 53 unter den Kugeln 14 hinwegtauchen kann. Dabei folgt der Ventilkörper 18 dem Ventilkörper 46 bzw. dem Stecker 2, so daß die Schenkel 35 die Nut 33 verlassen und beim weiteren Herausziehen gemäß Fig. 19 in die Verriegelungsnut 30 einfallen. Während dieser Bewegung wird die Gesperrefeder 9 gespannt. Bei völligem Herausziehen gemäß Fig. 6 gelangt der Ventilkörper 18 in die Schließlage am Kupplungskörper 8 und damit die Verriegelungsfeder 34 mit ihren Schenkeln 35 aus der Verriegelungsnut 30 heraus und in die Ausgangsstellung gemäß Fig. 6, bei der die Schenkel 35 in der Nut 32 und die Schenkel 36 in der Nut 31 liegen. Nach dem völligen Herausziehen des Steckers 2 kann dieser dann in die richtige Muffe 1 eingekuppelt werden. Die Teile an der Muffe 1 haben wieder ihre Ausgangsstellung gemäß Fig. 6 bzw. Fig. 1 erreicht, so daß die Muffe für einen erneuten Kuppelvorgang zur Verfügung steht.

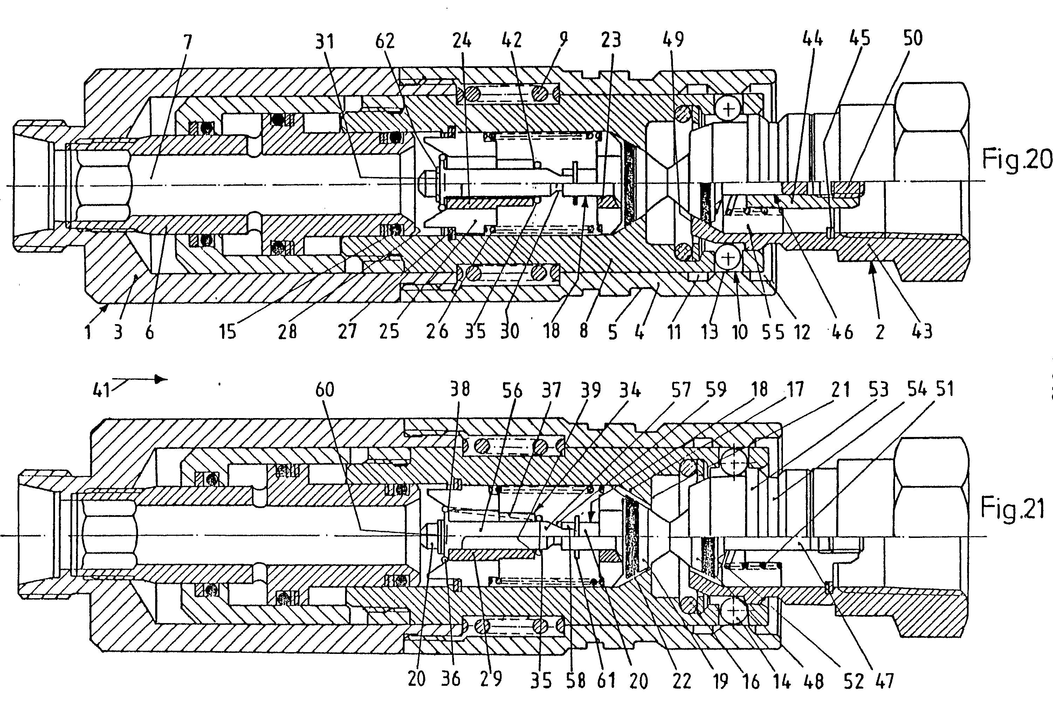

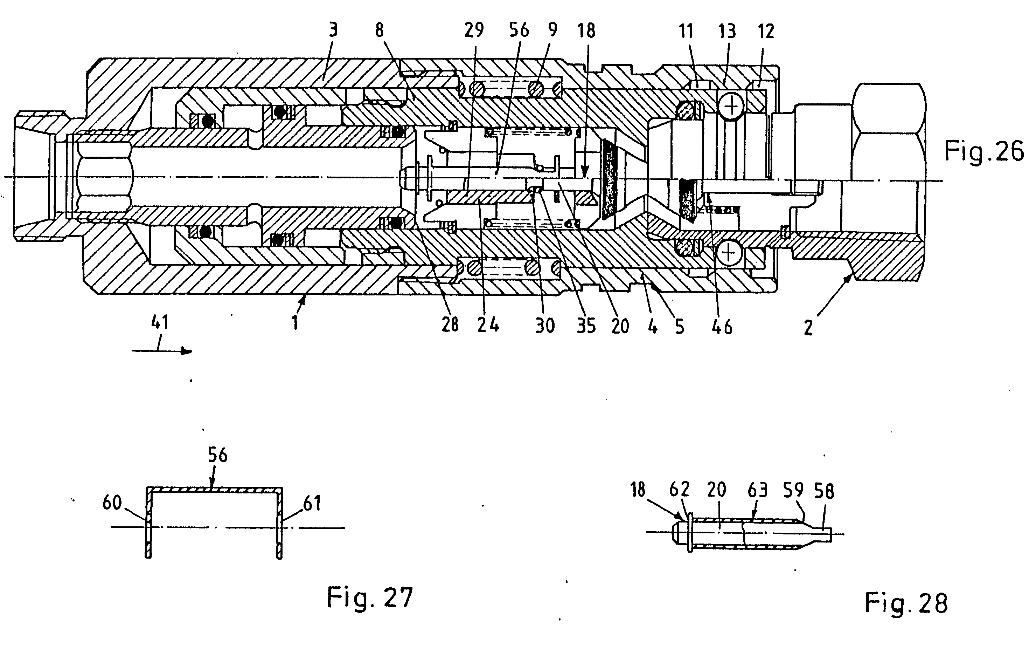

Ein weiteres Ausführungsbeispiel der Erfindung ist in den Fig. 20-27 dargestellt. Für gleich oder ähnlich ausgebildete Teile sind auch hier die Bezugszeichen 1 bis 55 verwendet, wie sie anhand des ersten Ausführungsbeispiels der Fig. 1-19 erläutert worden sind. Es fehlen lediglich die Bezugszeichen 32, 33 und 40, weil die Anordnung der Nut 32, der Nut 33 und des Aufnahmeabsatzes 40 bei dem jetzt zu beschreibenden Ausführungsbeispiel entfällt. Jedoch weist auch hier der Schaft 20 des Ventilkörpers 18 die Verriegelungsnut 30 auf. Neben der Verriegelungsfeder 34, die ähnlich ausgebildet ist, wie dies die Fig. 3-5 zeigen, also mit den Federbügeln 37, den Schenkeln 35 und den Schenkeln 36 ist eine Kulisse in Form eines Verschiebebügels 56 vorgesehen, wie er insbesondere aus Fig. 27 hervorgeht. Dieser Verschiebebügel 56 besitzt eine Spreizwandung 57, die die beiden Schenkel 35 so auseinandergespreizt hält, daß sie nicht in die Verriegelungsnut 30 eintreten können. Es versteht sich, daß die Schenkel 35 unter radialer Vorspannung stehen. Die Schenkel 36 dagegen liegen lediglich an dem Sternkörper 24 an und sind im übrigen auf einem solchen Durchmesser angeordnet, daß der Verschiebebügel 56 mit seinen Einzelteilen durch den Raum zwischen den Schenkeln 36 hindurchtreten kann, ohne hieran gehindert zu sein. An die Spreizwandung 57 schließt sich im vorderen Bereich des Verschiebebügels 56 eine Verengung 58 an, wobei der Übergang von der Spreizwandung 57 in die Verengung 58 von Schrägflächen 59 gebildet ist. Die verengung 58 ist so ausgeführt, daß während des Rückhubes die Verriegelungsnut 30 derart freikommt, daß die Schenkel 35 hier einrasten können, während im Bereich des Überhubes die Spreizwandung 57 die Verriegelungsnut 30 abdeckt, so daß die Schenkel 35 gerade nicht eintreten können. Der Verschiebebügel 56 besitzt beidendig Ohren 60, 61, die über den Schaft 20 des Ventilkörpers 18 mit Spiel hinübergreifen, so daß der Verschiebebügel 56 dieserhalb geführt und gehalten ist. Das Ohr 60 arbeitet mit einem Sicherungsring 62 zusammen, der in der Nut 31 des Schaftes 20 fest am Ventilkörper 18 gelagert ist. Der Gegenanschlag wird von der Stirnfläche 38 des Sternkörpers 24 gebildet. Das andere Ohr 61 arbeitet dagegen mit dem Ring 23 im Bereich des Kopfes 20 des Ventilkörpers 18 zusammen.

Die Wirkungsweise dieses zweiten Ausführungsbeispieles der Fig. 20-27 wird anhand der Fig. 20-26 verdeutlicht, die Zwischenstellungen eines Einkuppelvorganges zeigen, bei dem ein druckloser Stecker 2 in eine drucklose Muffe 1 eingeführt wird :

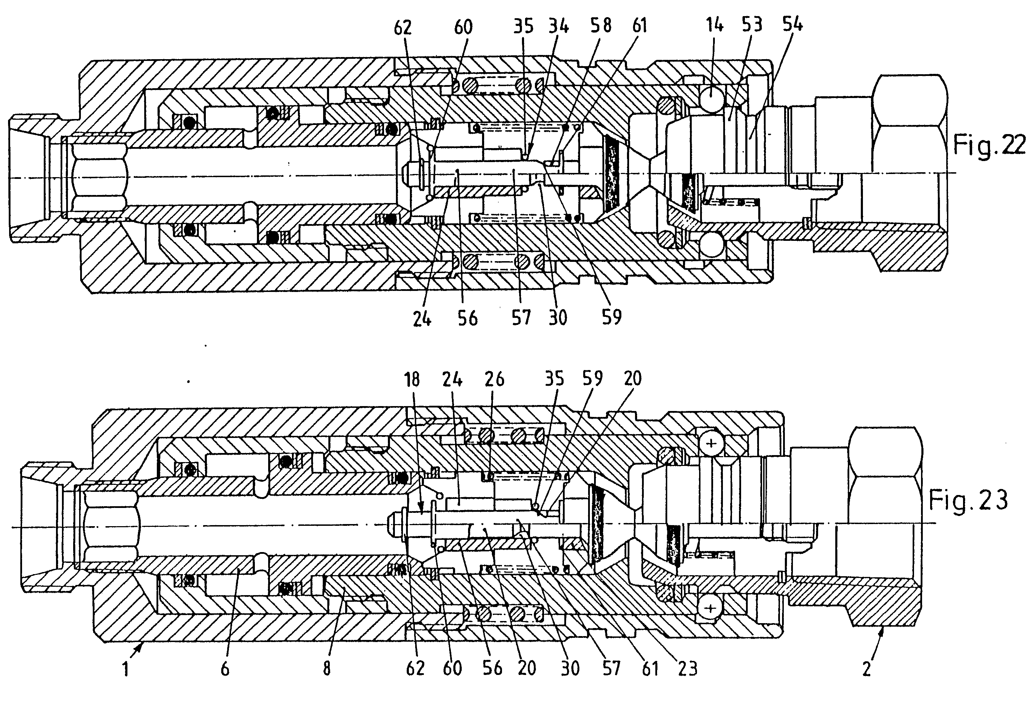

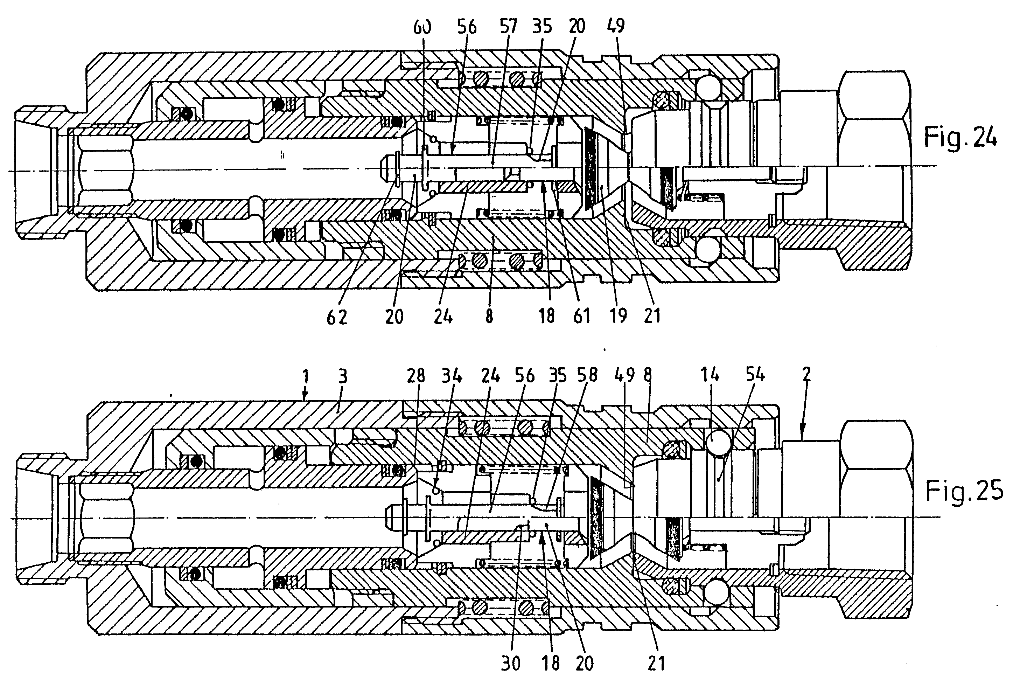

Fig. 20 zeigt das Einführen des Steckers 2 in die Muffe 1, wobei die beiden Ventilkörper 18 und 46 gerade noch beide geschlossen sind und sich lediglich mit ihren Köpfen 19 und 48 berühren. Der als Kulisse dienende Verschiebebügel 56 ist auf dem Schaft 20 des Ventilkörpers 18 mit Hilfe der Ohren 60 und 61 radial geführt und über das Ohr 60 zwischen dem Sicherungsring 62 und der Stirnfläche 38 des Sternkörpers 24 axial festgelegt. Das Verriegelungsmittel wird im wesentlichen aus der Verriegelungsfeder 34 und dem Verschiebebügel 56 gebildet. Eine Verriegelung liegt gemäß Fig. 20 und 21 noch nicht vor. Wenn der Stecker 2 beim Übergang zwischen den Fig. 20 und 21 weiter in die Muffe 1 hineingeschoben wird, dann öffnen beide Ventilkörper 18 und 46 etwa um das gleiche Maß, weil die Schließfedern 26 und 51 etwa gleiche Kraft aufweisen. Der Bund 33 trifft auf die Kugeln 14 auf, so daß in der fortgesetzten Einschiebebewegung des Steckers 2 der Kupplungskörper 8 relativ zum Gehäuse 3 und der mit diesem verbundenen Schiebehülse 4 entgegengerichtet zum Pfeil 41 mitverschoben wird. Diese Verschiebung geschieht unter Zusammendrückung der Verriegelungsfeder 9. Der Sternkörper 24 setzt schließlich auf dem gehäuseseitigen Anschlag 28 auf, und zwar lange bevor der einfache Ventilkörperhub erreicht ist. Es beginnt der sogenannte Überhub. Der Sternkörper 24 bleibt ortsfest stehen, während der Stecker 2 weiter in die Muffe 1 hineingeschoben wird, wobei auch der Schaft 20 des Ventilkörpers 18 zwar um einen anderen Weg, jedoch auch entgegengerichtet zum Pfeil 41 verschoben wird, so daß der Sicherungsring 62 (Fig. 22) von dem Ohr 60 freikommt. Die Verriegelungsfeder 34 hält mit Hilfe der Schenkel 35 und des über sie übertragenen radialen Druckes auf die Spreizwandung 57 den Verschiebebügel 56 relativ zum Sternkörper 24 fest. Dabei verschwindet die Verriegelungsnut 30 aus dem Bereich der Verengung 58 unter die Schrägfläche 59 und schließlich (Fig. 23) in den Bereich der Spreizwandung 57. Während dieser Bewegung setzt das Ohr 61 auf dem Ring 23 auf (Fig. 23), so daß jetzt auch der Verschiebebügel 56 gegenüber dem Sternkörper 24 entgegengerichtet zum Pfeil 41 verschoben wird, so daß die Schenkel 35 über die Schrägfläche 59 auf den Schaft 20 des Ventilkörpers 18 rutschen (Fig. 24). Der Ventilkörper 18 hat damit den größten Überhub zurückgelegt und beginnt relativ gesehen den Rückhub. Zwischenzeitlich die Stirnfläche 49 des Steckers auf die Stirnfläche 21 des Kupplungskörpers 8 aufgesetzt (Fig. 25), wobei die Kugeln 14 in die Verkeilungsnut 54 eintreten und damit Stecker 2 und Kupplungskörper 8 eine Bewegung gemäß Pfeil 41, also aus dem Gehäuse 3 heraus ausführen, während der Sternkörper 24 immer noch an dem Anschlag 28 in Anlage ist und daher ortsfest verbleibt. Von dem Sternkörper 24 wird die Verriegelungsfeder 34 festgehalten, die ihrerseits über die Schenkel 35 den Verschiebebügel 56 im Bereich der Schrägfläche 59 festhält bzw. noch so relativ verschiebt, daß die Schenkel 35 benachbart zu der Verengung 58 zu liegen kommen. Tritt jetzt der Schaft 20 des Ventilkörpers 18 mit seiner Verriegelungsnut 30 relativ gesehen aus dem Sternkörper 24 heraus, so rastet die Verriegelungsfeder 34 mit den Schenkeln 35 in die Verriegelungsnut 30 ein und es wird die Blockierstellung gemäß Fig. 26 erreicht. Dabei ist der Sternkörper 24 gleichzeitig von dem Anschlag 28 freigekommen. Die Stellung der beiden Ventilkörper 18 und 46 ist verriegelt. Auch bei Rückströmungen entgegengesetzt zum Pfeil 41 kann keiner der beiden Ventilkörper in eine Schließlage bewegt werden. Diese Blockierstellung wird erreicht, noch bevor die Druckmittelquelle an der Muffe 1 eingeschaltet ist. Die Breite des Verriegelungsrings 13 wirkt sich auf die einzuhaltenden Wege und Toleranzen aus. So ist es beispielsweise möglich, durch Vergrößerung bzw. Verbreiterung des Verriegelungsrings 13 größere Relativwege zwischen Ventilkörperschaft 20 und Verschiebebügel 56 zuzulassen bzw. zu erreichen, damit die Herstellungstoleranzen der Einzelteile überspielt bzw. entsprechend einer Herstellung mit normaler Genauigkeit zugelassen werden können. Der Entkuppelvorgang aus der Stellung der Teile gemäß Fig. 26 heraus geschieht durch Ziehen am Stecker 2 relativ zur Muffe 1. Wenn die Muffe 1 ortsfest eingebaut wird, was mit Hilfe der Nuten 5 gescheben kann, ist auch eine Abrißsicherung gegeben, d. h. der Stecker kann gewaltsam aus der Muffe herausgezogen werden, wobei dann alle fahrbereiten Ventilkörper schließen.

Es versteht sich, daß auch ein unter Druck stehender Stecker 2 gekuppelt werden kann. Es ergeben sich dann ähnliche Bewegungsabläufe wie anhand der Fig. 20-26 verdeutlicht. Lediglich bleibt der Ventilkörper 46 des Steckers 2 während des gesamten Einkuppelvorganges in seiner Schließstellung, so daß der Ventilkörper 18 und damit dessen Schaft 20 größere Wege zurücklegt, die aber grundsätzlich auch aus einem Überhub und einem Rückhub bestehen. Durch Einschalten der muffenseitigen Druckwelle wird der Ventilkörper 46 in seine Öffnungsstellung gedrückt, wobei die Verriegelung dabei durch das Sperrmittel eintritt.

Fig. 28 zeigt eine zweite Ausführungsform einer Kulisse, nämlich in Form eines Schubrohres 63. Dieses besteht, wie ersichtlich aus einem Rohrabschnitt, der auf dem Schaft 20 des Ventilkörpers 18 axial gleitend geführt ist und auf dem wiederum die Durchbrechung 29 des Sterkörpers 24 aufliegt. Auch dieses Schubrohr 63 besitzt in dem Bereich, der dem Kopf 19 des Ventilkörpers zugekehrt ist, die Schrägflächen 59 und die Verengungen 58, die hier ganz analog wirken wie bei dem Verschiebebügel 56. Die beiden Stirnflächen des Schubrohres 63 arbeiten einerseits mit dem Sicherungsring 62 und andererseits mit dem Ring 23 zusammen. Es ergibt sich eine analoge Wirkungsweise. Aus herstellungstechnischen Gründen ist diese Ausführungsform gemäß Fig. 28 besonders vorteilhaft.

Bezugszeichenliste :

1 = Muffe
2 = Stecker
3 = Gehäuse
4 = Schiebehülse
5 = Nuten
6 = Fortsatz
7 = Durchgangsbohrung
8 = Kupplungskörper
9 = Gesperrefeder
10 = Kugelgesperre
11 = Ausweichnut
12 = Ausweichnut
13 = Verriegelungsring
14 = Kugel
15 = Dichtung
16 = Dichtung
17 = eingezogener Rand
18 = Ventilkörper
19 = Kopf
20 = Schaft
21 = Stirnfläche
22 = Dichtung
23 = Ring
24 = Sternkörper
25 = Flügel
26 = Schließfeder
27 = Sicherungsring
28 = gehäuseseitiger Anschlag
29 = Durchbrechung
30 = Verriegelungsnut
31 = Nut
32 = Nut
33 = Nut
34 = Verriegelungsfeder
35 = Schenkel
36 = Schenkel
37 = Federbügel

38 = Stirnfläche
39 = Stirnfläche
40 = Aufnahmeabsatz
41 = Pfeil
42 = Verriegelungsfläche
43 = Gehäuse
44 = Sternkörper
45 = Sicherungsring
46 = Ventilkörper
47 = Schaft
48 = Kopf
49 = Stirnfläche
50 = Anschlagschraube
51 = Schließfeder
52 = Dichtung
53 = Bund
54 = Verkeilungsnut
55 = Innenraum
56 = Verschiebebügel
57 = Spreizwandung
58 = Verengung
59 = Schrägfläche
60 = Ohr
61 = Ohr
62 = Sicherungsring
63 = Schubrohr

## Patentansprüche

1. Unter Druck und auch drucklos kuppelbare Schnellverschlußkupplung, insbesondere für Hydraulikleitungen, bestehend aus zwei ineinander steckbaren und in der gekuppelten Stellung über ein von einer Gesperrefeder belastetes Kugelgesperre (10) zwischen einer Schiebehülse (4) und einem dazu relativ verschieblich gelagerten Kupplungskörper (8) verriegelbaren Kupplungshälften in Form eines Steckers (2) und einer Muffe (1) mit je einem durch eine Schließfeder (26, 51) in Schließrichtung belasteten, in entkuppelter Stellung der Kupplungshälften in Schließstellung gehaltenen und in einem in dem jeweiligen Kupplungskörper (8, 43) vorgesehenen Sternkörper (24, 44) geführten Ventilkörper (18, 46), wobei der Ventilkörper (46) des Steckers (2) bis zur Anlage an einem seine Offenstellung begrenzenden Anschlag (50) um den einfachen Ventilkörperhub, der Ventilkörper (18) der Muffe (1) jedoch um den doppelten Ventilkörperhub verschiebbar gelagert ist und am Ende des einfachen Ventilkörperhubes der Muffe wirksame, ein- oder ausrückbare Sperrmittel zur Freigabe des doppelten Ventilköperhubes und zur Verriegelung der beiden Ventilkörper (18, 46) in der Offenstellung zwischen den Anschlägen vorgesehen sind, dadurch gekennzeichnet, daß der Sternkörper (24) der Muffe (1) in seinem Kupplungskörper (8) gegen die Kraft der zugehörigen Schließfeder (26) und der Kupplungskörper (8) der Muffe (1) in der Schiebehülse (4) gegen die Kraft der Gesperrefeder (9) verschiebbar gelagert sind, daß die Sperrmittel aus einer abdeckbaren Verriegelungsnut (30) im Schaft (20) des Ventilkörpers (18) und einem vom Sternkörper (24) geschleppten Verriegelungsmittel besteht, und daß im Bewegungsbereich des von dem Kupplungskörper (8) geführten Sternkörpers (24) ein mit der Schiebehülse (4) verbundener gehäuseseitiger Anschlag (28) derart vorgesehen ist, daß innerhalb des enfachen Ventilkörperhubes zwischen dem Ventilkörper (18) und dem Kupplungskörper (8) der Sternkörper (24) auf den gehäuseseitigen Anschlag (28) auftrifft.und damit zwischen Ventilkörper (18) und Sternkörper (24) ein Überhub entsteht, während dessen Durchlaufen die Verriegelungsnut (30) abgedeckt ist, während bei dem anschlie-Benden Rückhub zwischen Ventilkörper (18) und Sternkörper (24) die Verriegelungsnut (30) zur Verriegelung der beiden Ventilkörper (18, 46) durch das Verriegelungsmittel freigegeben ist.

2. Schnellverschlußkupplung nach Anspruch 1, dadurch gekennzeichnet, daß als Verriegelungsmittel eine vom Sternkörper (24) geschleppte, in der Verriegelungsstellung in die im Schaft (20) des Ventilkörpers (18) angeordnete Verriegelungsnut (30) eingreifende Verriegelungsfeder (34)vorgesehen ist, und daß der Sternkörper (24) zum Abdecken der Verriegelungsnut (30) während des Überhubes einen Aufnameabsatz (40) zum Erfassen und zum Transport der Verriegelungsfeder (34) über die Verriegelungsnut (30) hinweg aufweist.

3. Schnellverschlußkupplung nach Anspruch 1, dadurch gekennzeichnet, daß als Verriegelungsmittel eine vom Sternkörper (24) geschleppte, in der Verriegelungsstellung in die im Schaft (20) des Ventilkörpers (18) angeordnete Verriegelungsnut (30) eingreifende Verriegelungsfeder (34) und eine Kulisse (56, 63) vorgesehen ist, die den Schaft (20) des Ventilkörpers (18) umgebend relativ zu diesem begrenzt verschiebbar gelagert ist und zum Abdecken der Verriegelungsnut (30) während des Überhubes eine Spreizwandung (57) zum Erfassen der Verriegelungsfeder (34) über die Verriegelungsnut (30) hinweig und eine Verengung (58) zur Freigabe der Verriegelungsnut (30) während des Rückhubes aufweist.

4. Schnellverschlußkupplung nach Anspruch 2 oder 3, dadurch gekennzeichnet, daß die Verriegelungsfeder (34) zwischen Sternkörper (24) und Schaft (20) des Ventilkörpers (18) der Muffe (1) eingeschaltet ist und der Sternkörper (24) beidendig je eine die Verschiebung der Verriegelungsfeder (34) relativ zum Schaft (20) des Ventilkörpers (18) der Muffe (1) bewirkende Stirnflächen (38, 39) sowie eine die Verriegelungsstellung sichernde Verriegelungsfläche (42) aufweist.

5. Schnellverschlußkupplung nach Anspruch 4, dadurch gekennzeichnet, daß die Verriegelungsfeder (34) mindestens zwei sich etwa rechtwinklig zur Achse des Schaftes (20) des Ventilkörpers (18) erstreckende und sich tangential an den Umfang des Schaftes (20) federnd anlegende Schenkel (35, 36) aufweist.

6. Schnellverschlußkupplung nach Anspruch 5, dadurch gekennzeichnet, daß die Verriegelungsfeder (34) paarweise angeordnete und radial auffedernde Schenkel (35, 36) aufweist, die über sich axial erstreckende Federbügel (37) miteinander verbunden sind.

7. Schnellverschlußkupplung nach Anspruch 3, dadurch gekennzeichnet, daß die Kulisse aus einem Verschiebebügel (56) mit beidendig den Schaft (20) des Ventilkörpers (18) umfassenden Ohren (60, 61) besteht und für die begrenzt verschiebbare Lagerung auf dem Schaft (20) ein einen Mitnahmeanschlag für das eine Ohr (60) bildender Sicherungsring (62) vorgesehen ist.

8. Schnellverschlußkupplung nach Anspruch 7, dadurch gekennzeichnet, das der Verschiebebügel (56) zwischen der Stirnfläche (38) des Sternkörpers (24) und dem Sicherungsring (62) verschiebbar gelagert ist.

9. Schnellverschlußkupplung nach Anspruch 3, dadurch gekennzeichnet, daß die Kulisse aus einem Schubrohr (63) besteht, welches den Schaft (20) des Ventilkörpers (18) umfassend in einer Durchbrechung (29) des Sternkörpers (24) gelagert ist.

10. Schnellverschlußkupplung nach Anspruch 2 und 4, dadurch gekennzeichnet, daß im Schaft (20) des Ventilkörpers (18) der Muffe (1) Nuten (31, 32, 33) zur Vergrößerung der Reibung zwischen Verriegelungsfeder (34) und dem Schaft (20) des Ventilkörpers (18) vorgesehen sind, die eine Tiefe aufweisen, die etwa dem wirksamen Durchmesser des Aufnahmeabsatzes (40) entspricht.

11. Schnellverschlußkupplung nach Anspruch 10, dadurch gekennzeichnet, daß die Verriegelungsfeder (34) auf dem Schaft (20) des Ventilkörpers (18) bei geschlossenem Ventilkörper eine Ausgangsstellung einnimmt, gegenüber der die Verriegelungsnut (30) um eine sich aus dem Überhub und dem Rückhub ergebende Strecke entfernt angeordnet ist.

12. Schnellverschlußkupplung nach Anspruch 1 bis 11, dadurch gekennzeichnet, daß der Schaft (20) des Ventilkörpers (18) der Muffe (1) gegenüber dem Sternkörper (24) um mindestens den doppelten Ventilkörperhub verschiebbar gelagert ist.

13. Schnellverschlußkupplung nach Anspruch 1 bis 12, dadurch gekennzeichnet, daß der Sternkörper (24) in der Ausgangsstellung von dem gehäuseseitigen Anschlag (28) einen kleineren Abstant als der einfache Ventilkörperhub aufweist.

14. Schnellverschlußkupplung nach Anspruch 1 bis 13, dadurch gekennzeichnet, daß die Verriegelungsfeder (34) von dem Sternkörper (24) mit axialem Spiel geschleppt wird.

15. Schnellverschlußkupplung nach Anspruch 1, dadurch gekennzeichnet, daß die Kraft der Schließfeder (26) der Muffe (1) etwa der Kraft der Schließfeder (51) des Steckers (2) entspricht.

## Claims

1. Quick-closing coupling which can be coupled under pressure and also without pressure, especially for hydraulic lines, consisting of two coupling halves, which are insertable in one another and which, in the coupled position, can be locked via a ball catch (10) loaded by a detent spring between a sliding sleeve (4) and a coupling body (8) mounted so as to be displaceable relative to the latter, the coupling halves taking the form of a plug (2) and a socket (1), each with a valve body (18, 46) which is loaded in the closing direction by a closing spring (26, 51) and, in the uncoupled position of the coupling halves, is held in the closing position and which is guided in a star body (24, 44) provided in the partidular coupling body (8, 43), the valve body (46) of the plug (2) being mounted so as to be displaceable up against a stop (50), limiting its open position, by the amount of a single valve-body stroke, whereas the valve body (18) of the socket (1) is mounted so as to be displaceable by the amount of double the valve-body stroke, and engageable or disengageable blocking means effective at the end of the single valve-body stroke being provided for releasing the double valve-body strocke and for locking the two valve bodies (18, 46) in the open position between the stops, characterized in that the star body (24) of the socket (1) is mounted in its coupling body (8) so as to be displaceable counter to the force of the associated closing spring (26), and the coupling body (8) of the socket (1) is mounted in the sliding sleeve (4) so as to be displaceable counter to the force of the detent spring (9), in that the blocking means consist of a coverable locking groove (30) in the shank (20) of the valve body (18) and of a locking means dragged by the star body (24), and in that, in the range of movement of the star body (24) guided by the coupling body (8), a stop (28) located on the housing and connected to the sliding sleeve (4) is provided, in such a way that within the single valve-body stroke between the valve body (18) and the coupling body (8) the star body (24) comes up against the stop (28) located on the housing, consequently producing between the valve body (18) and the star body (24) an excess stroke, during the execution of which the locking groove (30) is covered, whereas, during the subsequent return stroke between the valve body (18) and the star body (24), the locking groove (30) is exposed for the locking of the two valve bodies (18, 46) by the locking means.

2. Quick-closing coupling to Claim 1, characterized in that the locking means provided is a locking spring (34) which is dragged by the star body (24) and which, in the locking position, engages into the locking groove (30) provided in the shank (20) of the valve body (18), and in that, to cover the locking groove (30) during the excess stroke, the star body (24) has a receiving shoulder (40) for grasping the locking spring (34) and transporting it over the loking groove (30).

3. Quick-closing coupling according to Claim 1, characterized in that the locking means provided is a locking spring (34), dragged by the star body (24) and, in the locking position, engaging into the locking groove (30) provided in the shank (20) of the valve body (18), and a link (56, 63) which, surrounding the shank (20) of the valve body (18), is mounted so as to be displaceable to a limited extent relative to the latter and which, to cover the locking groove (30) during the excess stroke, has a spreading wall (57) for grasping the locking spring (34) .and transporting it over the locking groove (30) and a narrowed portion (58) for exposing the locking groove (30) during the return stroke.

4. Quick-closing coupling according to Claim 2 or 3, characterized in that the locking spring (34) is interposed between the star body (24) and the shank (20) of the valve body (18) of the socket (1), and the star body (24) has, at each of its two ends, an end face (38, 39), causing the displacement of the locking spring (34) relative to the shank (20) of the valve body (18) of the socket (1), and a locking face (42) securing the locking position.

5. Quick-closing coupling according to Claim 4, characterized in that the locking spring (34) has at least two legs (35, 36) which extend approximately at right angles to the axis of the shank (20) of the valve body (18) and which tangentially come resiliently up against the periphery of the shank (20).

6. Quick-closing coupling according to Claim 5, characterized in that the locking spring (34) has legs (35, 36) which are arranged in pairs and spring open radially and which are connected to one another via spring clips (37) extending axially.

7. Quick-closing coupling according to Claim 3, characterized in that the link consists of a sliding shackle (56) with lugs (60, 61) surrounding the shank (20) of the valve body (18) at both ends, and a retaining ring (62) forming a take-up stop for one lug (60) is provided for the limitedly displaceable mounting on the shank (20).

8. Quick-closing coupling according to Claim 7, characterized in that the sliding shackle (56) is mounted so as to be displaceable between the end face (38) of the star body (24) and the retaining ring (62).

9. Quick-closing coupling according to Claim 3, characterized in that the link consists of sliding tube (63) which, surrounding the shank (20) of the valve body (18), is mounted in a perforation (29) in the star body (24).

10. Quick-closing coupling according to Claims 2 and 4, characterized in that in the shank (20) of the valve body (18) of the socket (1) there are grooves (31, 32, 33) which are intended for increasing the friction between the locking spring (34) and the shank (20) of the valve body (18) and which have a depth corresponding approximately to the effective diameter of the receiving shoulder (40).

11. Quick-closing coupling according to Claim 10, characterized in that, when the valve body (18) is closed, the locking spring (34) assumes, on the shank (20) of the valve body (18), an initial position relative to which the locking groove (30) is arranged at a distance consisting of the excess stroke and the return stroke.

12. Quick-closing coupling according to Claims 1 to 11, characterized in that the shank (20) of the valve body (18) of the socket (1) is mounted so as to be displaceable relative to the star body (24) by the amount of at least double the valve-body stroke.

13. Quick-closing coupling according to Claims 1 to 12, characterized in that, in the initial position, the star body (24) is at a shorter distance than the single valve-body stroke from the stop (28) located on the housing.

14. Quick-closing coupling according to Claims 1 to 13, characterized in that the locking spring (34) is dragged by the star body (24) with an axial play,

15. Quick-closing coupling according to Claim 1, characterized in that the force of the closing spring (26) of the socket (1) corresponds approximately to the force of the closing spring (51) of the plug (2).

**Revendications**

1. Accouplement à jonction, du type à action rapide sous pression comme sans pression, en particulier pour conduites hydrauliques, composé de deux moitiés d'accouplement, enfichables l'une dans l'autre et verrouillables, en position accouplée, par l'intermédiaire d'un encliquetage (10) à billes, chargé par un ressort de blocage et placé entre un fourreau coulissant (4) et un corps d'accouplement (8) monté mobile par rapport à celui-ci, les deux moitiés d'accouplement (8) ayant la forme d'une fiche (2) et d'une douille (1), chacune avec un corps de soupape (18, 46), chargé en position de fermeture par un ressort de fermeture (26, 51), maintenu, en position désaccouplée des moitiés d'accouplement, en position de fermeture et guidé dans un corps en étoile (24, 44) prévu dans le corps d'accouplement correspondant (8, 43), cependant que le corps de soupape (46) de la fiche (2) est monté mobile jusqu'en appui contre une butée (50) limitant sa position d'ouverture et pour une course simple du corps de soupape, tandis que le corps de soupape (18) de la douille (1) est monté mobile sur une course double du corps de soupape et qu'à la fin de la course simple du corps de soupape de la douille, des moyens de blocage efficaces embrayables ou débrayables sont prévus pour libérer la course double du corps de soupape et pour verrouiller les deux corps de soupape (18, 46) dans la position d'ouverture entre les butées, caractérisé en ce que le corps en étoile (24) de la douille (1) est monté mobile dans son corps d'accouplement (8) contre l'action du ressort de fermeture (26) correspondant et que le corps d'accouplement (8) de la douille (1) est logé mobile dans le fourreau coulissant (4) contre l'action du ressort d'encliquetage (9) ; que les moyens de blocage se composent d'une rainure de verrouillage (30) recouvrable, pratiquée dans la tige (20) du corps de soupape (18) et d'un moyen de verrouillage entraîné par le corps en

étoile (24) ; que dans la zone de déplacement du corps en étoile (24) guidé par le corps d'accouplement (8), on prévoit une butée (28) reliée, du côté de l'enveloppe, au fourreau coulissant (4), de manière qu'à l'intérieur de la course simple du corps de soupape entre le corps de soupape (18) et le corps d'accouplement (8), le corps en étoile (24) viennent sur la butée (28) placée du côté de l'enveloppe et qu'il se produit donc une surcourse entre le corps de soupape (18) et le corps en étoile (24), la rainure de verrouillage (30) étant couverte pendant l'éxécution de cette surcourse, tandis que pendant la course de retour suivante entre le corps de soupape (18) et le corps en étoile (24), la rainure de verrouillage (30) pour le verrouillage des deux corps de soupape (18, 46) par le moyen de verrouillage est libérée.

2. Accouplement rapide suivant la revendication 1, caractérisé en ce que, comme moyen de verrouillage, on prévoit un ressort de verrouillage (34), entraîné par le corps en étoile (24) et coopérant, en position de verrouillage, avec la rainure de verrouillage (30) pratiquée dans la tige (20) du corps de soupape (18) et en ce que le corps en étoile (24) présente, pour couvrir la rainure de verrouillage (30) pendant la surcourse, un épaulement récepteur (40) pour la saisie et le transfert du ressort de verrouillage (34) par-dessus la rainure de verrouillage (30).

3. Accouplement rapide suivant la revendication 1, caractérisé en ce que comme moyen de verrouillage, on prévoit un ressort de verrouillage (34), entraîné par le corps en étoile (24), coopérant, en position de verrouillage, avec la rainure de verrouillage (30) pratiquée dans la tige (20) du corps de soupape (18) ainsi qu'une coulisse (56, 63), qui, entourant la tige (20) du corps de soupape (18), est logée mobile d'une manière limitée par rapport à ce dernier, et qui, pour couvrir la rainure de verrouillage (30) pendant la surcourse, présente une paroi d'écartement (57) pour saisir le ressort de verrouillage (34) par-dessus la rainure de verrouillage (30) ainsi qu'un rétrécissement (58) pour libérer la rainure de verrouillage (30) pendant la course de retour.

4. Accouplement rapide suivant la revendication 2 ou 3, caractérisé en ce que le ressort de verrouillage (34) est inséré entre le corps en étoile (24) et la tige (20) du corps de soupape (18) de la douille (1) et que le corps en étoile (24) comporte, à chaque extrémité, une surface frontale (38, 39) provoquant le déplacement du ressort de verrouillage (34) par rapport à la tige (20) du corps de soupape (18) de la douille (1) ainsi qu'une surface de verrouillage (42) assurant la position de verrouillage.

5. Accouplement rapide suivant la revendication 4, caractérisé en ce que le ressort de verrouillage (34) comporte au moins deux branches (35, 36) approximativement perpendiculaires à l'axe de la tige (20) du corps de soupape (18) et appuyées tangentiellement et élastiquement au pourtour de la tige (20).

6. Accouplement rapide suivant la revendication 5, caractérisé en ce que le ressort de verrouillage (34) comporte des branches (35, 36), disposées par paires et s'ouvrant radialement, qui sont reliées entre elles par des étriers axiaux (37) à ressort.

7. Accouplement rapide suivant la revendication 3, caractérisé en ce que la coulisse est constituée par un étrier de déplacement (56), comportant, aux deux extrémités, des oreilles (60, 61) entourant la tige (20) du corps de soupape (18) et qu'il est prévu pour le logement à déplacement limité sur la tige (20) d'un circlips (62) formant une butée d'entraînement pour une des oreilles (60).

8. Accouplement rapide suivant la revendication 7, caractérisé en ce que l'étrier de déplacement (56) est monté mobile entre la surface frontale (38) du corps en étoile (24) et le circlips (62).

9. Accouplement rapide suivant la revendication 3, caractérisé en ce que la coulisse est constituée par un tube de poussée (63), qui entoure la tige (20) du corps de soupape (18) et est logé dans une traversée (29) du corps en étoile (24).

10. Accouplement rapide suivant les revendications 2 et 4, caractérisé en ce que, dans la tige (20) du corps de soupape (18) de la douille (1), on prévoit des rainures (31, 32, 33), pour augmenter le frottement entre le ressort de verrouillage (34) et la tige (20) du corps de soupape (18), qui ont une profondeur correspondant environ au diamètre efficace de l'épaulement récepteur (40).

11. Accouplement rapide suivant la revendication 10, caractérisé en ce que le ressort de verrouillage (34) prend, sur la tige (20) du corps de soupape (18), quand le corps de soupape est fermé, une position de départ par rapport à laquelle la rainure de verrouillage (30) est éloignée d'une distance découlant de la surcourse et de la course de retour.

12. Accouplement rapide suivant les revendications 1 à 11, caractérisé en ce que la tige (20) du corps de soupape (18) de la douille (1) est, par rapport au corps en étoile (24), logé mobile d'au moins la double course du corps de soupape.

13. Accouplement rapide suivant les revendications 1 à 12, caractérisé en ce que le corps en étoile (24) présente, dans la position de départ à partir de la butée (28) placée du côté de l'enveloppe, une distance plus petite que la course simple du corps de soupape.

14. Accouplement rapide suivant les revendications 1 à 13, caractérisé en ce que le ressort de verrouillage (34) est entraîné avec un jeu axial par le corps en étoile (24).

15. Accouplement rapide suivant la revendication 1, caractérisé en ce que la force du ressort de fermeture (26) de la douille (1) correspond environ à la force du ressort de fermeture (51) de la fiche (2).

Fig. 1

Fig. 2

Fig. 3

Fig. 4

Fig. 5

2

Fig.6

Fig.7

3

Fig.8

Fig.9

Fig 10

Fig.11

0 096 649

Fig.12

Fig.13

38   30   21   49   54

36   24   34   35   20   18   46   14   12

1   8   10   53   2

0 096 649

Fig.14

Fig.15

Fig.16

Fig.17

0 096 649

8

Fig.18

Fig.19

0 096 649

0 096 649

Fig.20

Fig.21

10

0 096 649

Fig.22

Fig.23

11

Fig. 24

Fig. 25

0 096 649

Fig.26

Fig. 27

Fig. 28

0 096 649

13